# EUROPÄISCHE PATENTSCHRIFT

(11) **EP 2 831 428 B1**
(45) Veröffentlichungstag und Bekanntmachung des Hinweises auf die Patenterteilung: **14.11.2018**
(21) Anmeldenummer: 13718086.5
(22) Anmeldetag: 12.03.2013
(51) Int. Cl.: F15B 13/04, E21B 4/14, F16K 11/085, B25D 9/26, E02F 3/96, E02F 9/22

(54) **Hydraulisches Schlagwerk**
Hydraulic percussive device
Dispositif à percussion hydraulique

(30) Priorität: 30.03.2012 DE 102012006587; 20.06.2012 DE 102012012297
(43) Veröffentlichungstag der Anmeldung: 04.02.2015
(73) Patentinhaber: Construction Tools GmbH, DE-45143 Essen (DE)
(72) Erfinder: DIRR, Colin, 45527 Hattingen (DE)
(74) Vertreter: Patentanwälte Vomberg & Schart
(86) Internationale Anmeldenummer: PCT/DE2013/000139
(87) Internationale Veröffentlichungsnummer: WO 2013/143520

(56) Entgegenhaltungen:
- EP-A1- 0 685 301
- DE-A1- 10 240 852
- DE-A1- 19 913 276
- US-A- 2 523 532

## Beschreibung

Die vorliegende Erfindung betrifft ein hydraulisch betriebenes Schlagwerk mit einem Ventil zur Steuerung des hydraulisch betrieben Schlagwerks mit einem Hauptventil, das als Drehschieberventil mit einem Drehschieber ausgebildet ist, wobei das Hauptventil zwei Schaltfunktionen besitzt, wonach der Hub des Schlagkolbens über eine erste Schaltfunktion des Hauptventils veränderbar ist, und über eine zweite Schaltfunktion bestimmbar ist, ob das Schlagwerk nach dem Auftreten mindestens eines Leerschlags weitere Schläge durchführt.

Hydraulikhämmer weisen teilweise mehrere Ventile auf die bspw. erforderlich sind, um eine Hin- und Herbewegung des Schlagkolbens zu steuern, das Betriebsverhalten und die Leistung des Schlagwerks an bestimmte Betriebszustände anzupassen oder das Schlagwerk vor Überlastung zu schützen. Für bestimmte Anwendungen wird zum Beispiel sowohl eine manuelle Hubumschaltung (Langhub oder Kurzhub) als auch eine manuellen Umschaltung der Leerschlagsicherung gefordert (Normalbetrieb oder Leerschlagsicherung), was durch zwei getrennt angeordnete und schaltbare Ventile erreicht werden kann.

Nach dem Stand der Technik sind bspw. Ausführungen bekannt, bei denen die Funktionen Hubumschaltung und Leerschlagsicherung entweder über zwei getrennte Ventile oder über ein einziges Ventil eingestellt werden.

Bei einer Ausführung mit zwei Ventilen, sind neben der Langhubleitung eine separate Kurzhubleitung zu dem einen und eine separate Leerschlagleitung zu dem anderen Ventil geführt, die jeweils in unterschiedlichen Positionen (axial beabstandet) auf die Zylinderlaufbahn treffen. Dadurch können im Rückhub, der Kolbenweg zwischen der theoretischen Aufschlagposition und der Position, zu der der Schlaghub eingeleitet wird, und der Kolbenweg in Schlaghubrichtung, zwischen der theoretischen Aufschlagposition und der Position zu der die Abschaltung des Schlagwerks erfolgt, relativ frei gewählt werden. Nachteilig ist der große erforderliche Bauraum für die beiden Ventile, die vielen zu den Ventilen führenden Leitungen und der damit verbundene hohe Fertigungsaufwand, was zu großen Außenabmessungen, einem hohen Gewicht des Schlagwerks sowie zu hohen Herstellkosten führt.

Aufgrund der separaten Leitungen und der getrennten Ventile sind folgende Schaltkombinationen möglich:

| | |
|---|---|
| • Normalhub (Langhub) | Normalbetrieb |
| • Normalhub (Langhub) | Leerschlagsicherung aktiviert (Abschaltung) |
| • Kurzhub | Leerschlagsicherung deaktiviert (Normalbetrieb) |
| • Kurzhub | Leerschlagsicherung aktiviert (Abschaltung) |

Bei Ausführungen mit einem Ventil, welches beide Funktionen (Hubumschaltung und Leerschlagsicherung) steuert, werden zwei Steuerungsfunktionen (Kurzhub und Leerschlagsicherung) durch die gemeinsame Nutzung einer einzigen Leitung realisiert, die je nach Schaltstellung des Ventils, entweder als Leerschlagleitung (Abschaltleitung) oder Kurzhubleitung wirkt. Nachteilig ist jedoch, dass die Hublänge im Kurzhub und der Kolbenweg zwischen der theoretischen Aufschlagposition und der Position zu der die Durchführung eines Rückhubs und weiterer Arbeitszyklen gestoppt wird (Abschaltung), voneinander abhängig sind und nicht frei gewählt werden können, was sich nachteilig auf die Funktion, die Leistung und Baugröße des Schlagwerks auswirken kann.

Folgende Kombinationen sind bei Verwendung eines Ventils und einer gemeinsamen Leitung nach dem bekannten Stand der Technik möglich:

| | |
|---|---|
| • Normalhub (Langhub), | Leerschlagsicherung aktiviert (Abschaltung) |
| • Normalhub (Langhub), | Leerschlagsicherung deaktiviert (Normalbetrieb) |
| • Kurzhub, | Leerschlagsicherung deaktiviert (Normalbetrieb) |

Weiterhin weisen hydraulische Schlagwerke teilweise noch weitere Ventile auf, beispielsweise ein Pilotventil zur Ansteuerung des Steuerschiebers, ein Druckbegrenzungsventil oder Stromregelventil um die Leistung, bzw. den Betriebsdruck des Schlagwerks einzustellen oder zu begrenzen. Diese Ventile sowie die oben beschriebenen Hubumschaltungsventile und Leerschlagsicherungsventile sind bisher getrennt voneinander in den Schlagwerksbauteilen eingebaut worden. Aus dem Stand der Technik sind bereits Ventileinrichtungen bekannt, bei denen innerhalb eines Drehschiebers ein weiteres Nebenventil angeordnet ist.
DE 199 13 276 und US 2,523,532 zeigen jeweils einen Drehschieber mit integrierter Überlastsicherung.
DE 102 40 852 offenbart einen Verteilerblock mit einem äußeren Drehschieber und einem inneren Längsschieber, der für eine dauerhafte Versorgung der eingeschlossenen Verbraucher mit Druck sorgt.

EP 0 685 301 A1 offenbart ein hydraulisch betriebenes Schlagwerk mit einem Hauptventil, das als Drehschieberventil mit einem Drehschieber ausgebildet ist.

Die Aufgabe der vorliegenden Erfindung besteht darin, den Bauraum und die Herstellkosten solcher Ventile an einem hydraulischen Schlagwerk zu reduzieren. Diese Aufgabe wird durch das hydraulische Schlagwerk gemäß Anspruch 1 gelöst. Erfindungsgemäß ist der Drehschieber eines Drehschieberventils als Aufnahmegehäuse ausgestaltet, das ein als Nebenventil ausgebildetes Ventilelement aufnimmt, wobei das Ventilelement ein Pilotventil ist, das zur Steuerung eines Steuerschiebers über eine Umsteuerleitung mit der Steuerfläche des Steuerschiebers verbunden ist. Durch die Ineinanderschachtelung von zwei Ventilen wird die Anzahl der erforderlichen Aufnahmebohrungen für Ventile in dem Schlagwerk, sowie die Anzahl der für die hydraulische Anbindung der Ventile erforderlichen Bohrungen reduziert. Die Baugröße des Schlagwerks, sein Gewicht und seine Herstellkosten lassen sich dadurch senken. Auch lassen sich selbst komplexe kleine Bauteile, wie Ventilbaugruppen, kostengünstiger herstellen, als eine Vielzahl von Ventilbohrungsaufnahmen in die wesentlich größeren, unhandlicheren und schwerer zu bearbeitenden großen Schlagwerkbauteile, wie Zylinderdeckel oder Zylinder. Das Konstruktionsprinzip der ineinandergeschachtelten Ventile ist auch für andere Ventilfunktionen und Ventilkonstruktionen möglich.

Um das Schlagwerk vor zu hohen Belastungen bei Leerschlägen zu schützen, die dann auftreten, wenn das Schlagwerk über den Meißel nicht ausreichend an das zu bearbeitende Material angedrückt wird oder der Meißel weit in weiches Material eindringt, soll der Betrieb des Schlagwerks mit Normalhub, der auch als Langhub bezeichnet wird, nur gleichzeitig mit aktivierter Leerschlagsicherung (Abschaltung) möglich sein, wozu das Hauptventil zwei Schaltfunktionen besitzt. Hierzu ist das Hauptventil bzw. das Drehschieberventil so ausgeführt, dass der Hub des Schlagkolbens über eine erste Schaltfunktion des Hauptventils veränderbar ist, und über eine zweite Schaltfunktion bestimmbar ist, ob das Schlagwerk nach dem Auftreten mindestens eines Leerschlags weitere Schläge durchführt. Durch die zwei Schaltfunktionen kann das Schalten des Drehschieberventils die Hublänge und gleichzeitig das Abschaltverhalten (Leerschlagsicherung) von Hydraulikschlagwerken beeinflusst werden. Jeweils einer Schaltstellung der Hubumschaltungsfunktion ist eine Schaltstellung der Leerschlagsicherungsfunktion zugeordnet.

Bevorzugte Ausführungsformen der vorliegenden Erfindung werden im Folgenden und in den Unteransprüchen beschrieben.

Nach einer ersten bevorzugten Ausführungsform ist das Drehschieberventil in einem Gehäuse angeordnet, das beispielsweise ein separater Ventilblock sein kann, der an dem Schlagwerk angeordnet ist. Alternativ hierzu kann der Drehschieber auch unmittelbar in einer Aufnahmebohrung des Schlagwerks eingebaut sein, die sich beispielsweise in dem Zylinderdeckel oder Zylinder des Schlagwerks befindet, womit der Zylinderdeckel oder der Zylinder das Gehäuse bildet. Ferner könnte der Drehschieber in einer Buchse gelagert sein, um als Einheit einer Ventilpatrone in eine Aufnahmebohrung eingesetzt zu werden. Die Anordnung des Drehschieberventils ist nicht auf die genannten Beispiele beschränkt.

Nach einer weiteren bevorzugten Ausführungsform der Erfindung ist vorgesehen, dass das Nebenventil als Drehschieber-, Längsschieber- oder Sitzventil ausgeführt ist, wobei das Hauptventil vorzugsweise manuell und das Nebenventil vorzugsweise manuell oder hydraulisch betätigbar ist. Gemäß einer Weiterbildung eines solchen Ventils ist vorgesehen, dass in dem Drehschieber eines manuell betätigbaren Drehschieberventils, mit welchem die Funktionen einer Hubumschaltung und einer Leerschlagsicherung gesteuert werden, ein Nebenventil in Form eines hydraulisch betätigbaren Längsschieberventils angeordnet ist, das als Pilotventil für den Steuerschieber einsetzbar ist. Das Ventilelement des Längsschieberventils ist in dem Drehschieber angeordnet bzw. gelagert. Mit anderen Worten stellt der Drehschieber das Ventilgehäuse des Längsschieberventils dar.

Nach einer weiteren bevorzugten Ausführungsform der Erfindung ist vorgesehen, dass je eine Schaltstellung einer ersten Schaltfunktion mit je einer Schaltstellung einer zweiten Schaltfunktion gekoppelt ist. Insbesondere sind die Schaltstellungen der Schaltfunktionen so gekoppelt, dass wenn das Schlagwerk aufgrund der ersten Schaltstellung der ersten Schaltfunktion Schlaghübe mit langem Hub ausführt, das Schlagwerk aufgrund der ersten Schaltstellung der zweiten Schaltfunktion nach dem Auftreten eines Leerschlags gestoppt wird und dass wenn das Schlagwerk aufgrund der zweiten Schaltstellung der ersten Schaltfunktion Schlaghübe mit kurzem Hub ausführt, das Schlagwerk aufgrund der zweiten Schaltstellung der zweiten Schaltfunktion nach dem Auftreten eines Leerschlags nicht gestoppt wird und wiederholt Leerschläge ausführt bzw. ausführen kann. Allerdings führt die zweite Schaltstellung nur zu wiederholten Leerschlägen, wenn der Meißel nicht richtig angedrückt ist oder durch das Material bricht und dadurch der Schlagkolben sein theoretische Aufschlagposition in Schlaghubrichtung um einen bestimmten Weg überfährt. Wenn das Schlagwerk beispielsweise nach einem oder mehreren Leerschlägen wieder ausreichend angedrückt wird, werden "normale" Hübe mit einem reduzierten Hub (Kurzhub) ausgeführt. Darüber hinaus ist vorgesehen, dass die Schaltstellungen der Schaltfunktionen so gekoppelt sind, dass in den jeweils ersten Schaltstellungen eine Leerschlagleitung mit einer den Betriebsdruck führenden Druckleitung verbunden ist und die Kurzhubleitung von der Langhubleitung getrennt ist und in den jeweils zweiten Schaltstellungen die Leerschlagleitung von einer den Betriebsdruck führenden Druckleitung getrennt ist und die Kurzhubleitung mit einer Langhubleitung verbunden ist.

Durch diese Maßnahmen und die Verstellmöglichkeit zwischen nur zwei Schaltstellungen sind nur die folgenden Schaltkombinationen möglich:

| | |
|---|---|
| ▪ Normalhub (Langhub) | Aktivierte Leerschlagsicherung (Abschaltung) |
| ▪ Kurzhub | deaktivierte Leerschlagsicherung (Normalbetrieb) |

Bei einer Erhöhung der Anzahl der Schaltstellungen wären auch mehr Kombinationen möglich.

Im Rahmen der vorliegenden Erfindung sind insbesondere folgende bevorzugte Ausführungsformen vorgesehen:
a) Das Hauptventil ist vorzugsweise ein 4/2-Wege-Drehschieberventil und das Nebenventil ist ein 3/2-Wege-Längsschieberventil. Das Drehschieberventil ist manuell betätigbar und in beiden Schaltstellungen formschlüssig arretierbar. In einer ersten Schaltstellung des Hauptventils ist die Kurzhubleitung von der Langhubleitung getrennt (Langhub) und die Leerschlagleitung ist mit der Druckleitung verbunden (Leerschlagsicherung aktiviert). In einer zweiten Schaltstellung des Hauptventils ist die Kurzhubleitung mit der Langhubleitung verbunden (Kurzhub) und die Leerschlagleitung ist von der Druckleitung getrennt (Leerschlagsicherung deaktiviert).
   Das Nebenventil ist vorzugsweise hydraulisch betätigbar und besitzt eine erste Schaltstellung, in der die Steuerfläche des Steuerschiebers zur Druckleitung verbunden ist (Schlaghubposition). In einer zweiten Schaltstellung ist die Steuerfläche des Steuerschiebers mit der Tankleitung verbunden (Rückhubposition).
b) Alternativ hierzu kann das Hauptventil als 4/3-Wege-Drehschieberventil und das Nebenventil als 3/2-Wege-Längsschieberventil ausgebildet sein. In einer ersten Schaltstellung des Hauptventils ist die Kurzhubleitung von der Langhubleitung getrennt (Langhub) und die Leerschlagleitung ist mit der Druckleitung verbunden (Leerschlagsicherung aktiviert). In einer zweiten Schaltstellung des Hauptventils ist die Kurzhubleitung von der Langhubleitung getrennt (Langhub) und die Leerschlagleitung ist von der Druckleitung getrennt (Leerschlagsicherung deaktiviert). Darüber hinaus ist eine dritte Schaltstellung des Hauptventils vorgesehen, bei der die Kurzhubleitung mit der Langhubleitung verbunden ist (Kurzhub) und die Leerschlagleitung von der Druckleitung getrennt ist (Leerschlagsicherung deaktiviert).
   Das hydraulisch betätigbare Nebenventil besitzt zwei unterschiedliche Schaltstellungen, wobei in einer ersten Schaltstellung die Steuerfläche des Steuerschiebers zur Druckleitung verbunden ist (Schlaghubposition), und bei einer zweiten Schaltposition die Steuerfläche des Steuerschiebers zur Tankleitung verbunden ist (Rückhubposition).
c) Nach einer weiteren Ausführungsform ist vorgesehen, dass das Hauptventil als 3/2-Wege-Drehschieberventil und das Nebenventil als 3/2-Wege-Längsschieberventil ausgebildet ist. Bei einer derartigen Ausgestaltung weist das Hauptventil 3 hydraulische Anschlüsse auf, wobei ein Anschluss an eine Signalleitung angeschlossen ist, die je nach Schaltstellung des Hauptventils die Funktion einer Kurzhubleitung oder Leerschlagleitung übernimmt. In einer ersten Schaltstellung des Hauptventils ist die Signalleitung von der Langhubleitung getrennt und mit der Druckleitung verbunden (Langhub, Leerschlagsicherung aktiviert). In der zweiten Schaltstellung des Hauptventils ist die Signalleitung mit der Langhubleitung verbunden und von der Druckleitung getrennt (Kurzhub, Leerschlagsicherung deaktiviert).
   In der ersten Schaltstellung des hydraulisch betätigbaren Nebenventils ist die Steuerfläche des Steuerschiebers zur Druckleitung verbunden (Schlaghubposition), während in der zweiten Schaltstellung des Nebenventils die Steuerfläche des Steuerschiebers zur Tankleitung verbunden ist (Rückhubposition).
d) Schließlich ist eine Ausführungsform mit einem 2/2-Wege-Drehschieberventil als Hauptventil und einem 2/2-Wege-Längsschieberventil als Nebenventil vorgesehen, wobei beide Ventile zwei unterschiedliche Schaltstellungen einnehmen können und jeweils zwei hydraulische Anschlüsse besitzen. In einer ersten Schaltstellung des Hauptventils ist die Kurzhubleitung von der Langhubleitung getrennt (Langhub), während in der zweiten Schaltstellung des Hauptventils die Kurzhubleitung mit der Langhubleitung verbunden ist (Kurzhub). Das vorzugsweise manuell betätigbare und kraftschlüssig arretierbare Nebenventil weist eine erste Schaltstellung auf, bei der die Leerschlagleitung von der Druckleitung getrennt ist (Leerschlagsicherung deaktiviert), und eine zweite Schaltstellung, bei der die Leerschlagleitung mit der Druckleitung verbunden ist (Leerschlagsicherung aktiviert).

Konkrete Ausführungen der Erfindung werden im Folgenden mit Bezug auf die Figuren beschrieben:

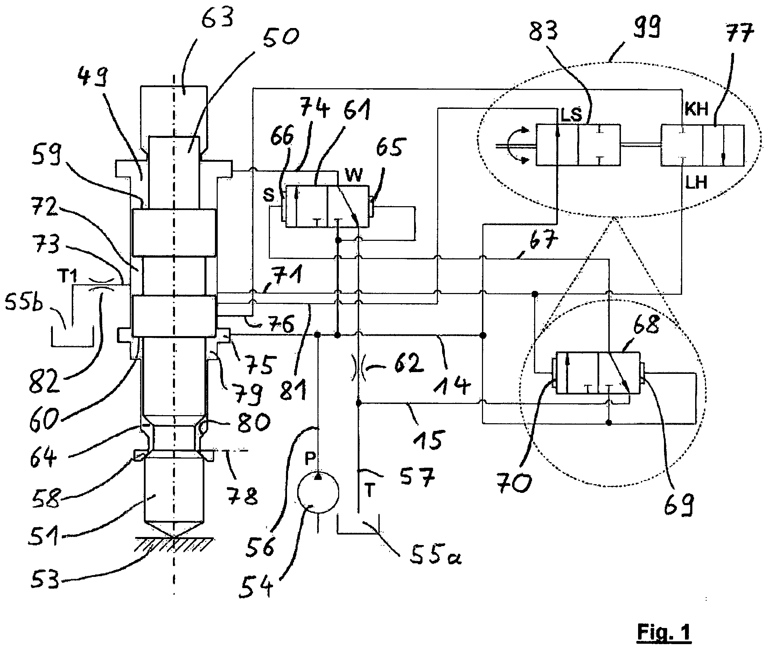

### Beschreibung der Fig. 1

Druckmittelbetriebene Schlagvorrichtungen, werden in Hydraulikhämmern die insbesondere zum Zerkleinern von Gestein, Beton oder sonstigen Baustoffen dienen und in Bohrhämmern, die zum Bohren von Löchern in Gestein und sonstige Baustoffe dienen eingesetzt und werden in den meisten Fällen als Zusatz- oder Anbaugeräte für Baumaschinen wie beispielsweise Bagger, Lader oder sonstige Trägereinheiten eingesetzt.

Über eine Druckleitung 56 sowie eine Tankleitung 57 ist das Schlagwerk hydraulisch mit der Pumpe 54 bzw. dem Tank 55a, 55b eines Trägergerätes, bspw. eines Baggers verbunden. Die auf dem Bagger vorhandenen Ventile, die bspw. zum Herstellen, bzw. Unterbrechen der Verbindung zwischen Pumpe und Druckleitung, zur Maximaldruckbegrenzung oder Begrenzung des in der Druckleitung fließenden Volumenstroms genutzt werden, sind hier zur Verbesserung der Übersichtlichkeit nicht dargestellt. Das Schlagwerk besteht aus einem Zylindergehäuse, in dem ein Schlagkolben 50 geführt ist, einem Zylinderdeckel und einem Hammerunterteil, in dem der Meißel 51 bzw. das Einsteckende über Verschleißbuchsen gelagert ist. Der Zylinderdeckel, das Zylindergehäuse und das Hammerunterteil bilden die Hauptkomponenten des Schlagwerkgehäuses. Dargestellt ist nur die vereinfachte innere Kontur des Zylindergehäuses und des Deckels. Im normalen Betrieb drückt das Trägergerät das Schlagwerk in Richtung des zu bearbeitenden Materials 53, sodass sich das Schlagwerk über den im Hammerunterteil angeordneten Meißelanschlag 58 an einer Anlagefläche des oberen Meißelendes abstützt und das untere Meißelende gegen das zu bearbeitende Material gedrückt wird.

Im normalen Betrieb schlägt der hydraulisch angetriebene Schlagkolben am Ende jeden Schlaghubs auf das sich im Schlagwerkgehäuse befindliche obere Ende des Meißels und überträgt seine kinetische Energie auf den Meißel. Die in den Meißel eingeleitete Energie bewirkt eine hohe Stoßkraft, die vom Meißel auf das Material übertragen wird und seine Zerstörung bewirkt.

Der Schlagkolben 50 ist als Differentialkolben ausgeführt, d. h. er besitzt zwei entgegengerichtete ringförmige Antriebsflächen 59, 60 mit unterschiedlicher Größe. Die untere Antriebsfläche 60, über die bei Druckbeaufschlagung der Rückhub, bei dem sich der Schlagkolben nach oben bewegt, ausgelöst wird, ist ständig mit einem vorgegebenen Betriebsdruck beaufschlagt, der in der Druckleitung 56 während des Betriebs ansteht. Die obere Antriebsfläche 59, über die mittels Druckbeaufschlagung der Schlaghub, bei dem sich der Schlagkolben nach unten bewegt, ausgelöst wird, wird abhängig von der Stellung eines Steuerschiebers 61 mit dem Betriebsdruck beaufschlagt oder zum Tankdruck entlastet. Der Schlaghub ist möglich, da die obere ringförmige Antriebsfläche 59 größer ist als die untere 60, so dass sich bei einer Beaufschlagung beider Flächen mit dem Betriebsdruck eine in Schlagrichtung gerichtete resultierende Kraft ergibt. Der sich bewegende Kolben verdrängt beim sogenannten Schlaghub das von der kleinen, unteren Antriebsfläche verdrängte Öl in Richtung der größeren oberen Antriebsfläche 59 des Kolbens, zu der auch das von der Pumpe 54 kommenden Öl fließt. Beim Rückhub fließt das Öl von der Pumpe 54 ausschließlich in Richtung der flächenkleineren unteren Antriebsfläche 60, wohingegen das Öl von der flächengrößeren, oberen Antriebsfläche 59 über eine Rücklaufdrossel 62, die für einen ruhigen Lauf des Hammers sorgt, zum Tank 55a abgeführt wird.

Das dargestellte Schlagwerk besitzt noch einen Gasspeicher 63, nämlich einen unter Gasdruck stehenden Raum, in den die obere Stirnfläche des Kolbens hineinragt. Der Gasdruck in diesem Raum übt auf den Kolben eine in Richtung des Schlaghubes wirkende zusätzliche Kraft aus. Die angesprochenen Schlagwerke können jedoch auch ohne Gasspeicher ausgeführt werden. Der am unteren Kolbenende liegende Kolbenteil einschließlich der dortigen Stirn- bzw. Schlagfläche ragt in einen sogenannten Schlagraum 64 herein, der mit der Atmosphäre verbunden ist.

Der bereits eingangs erwähnte Steuerschieber 61, der sich vorzugsweise im Zylinderdeckel des Schlagwerks befindet, verbindet je nach Schaltstellung die flächenmäßig größere obere Antriebsfläche 59 entweder mit der Druckleitung 56, so dass dort der Betriebsdruck anliegt oder entlastet während des Rückhubs diese Fläche über die Tankleitung 57, zum Tank 55a.

Auch der Steuerschieber 61 kann ähnlich zum Schlagkolben zwei Antriebsflächen besitzen, wobei eine erste Fläche, die Rückstellfläche 65, über die Druckleitung 56 konstant mit dem Betriebsdruck beaufschlagt ist und eine dieser entgegengerichte, flächengrößere zweite Fläche, die Steuerfläche 66, wahlweise mit dem Betriebsdruck beaufschlagt oder zum Tankdruck entlastet wird. Durch die unterschiedliche Größe der beiden Flächen kann der Steuerschieber bei entsprechender Druckbeaufschlagung der Flächen in eine seiner Endlagen verschoben werden.

Die Steuerfläche 66, ist an eine Umsteuerleitung 67 angeschlossen, die über ein Pilotventil 68 wahlweise mit dem Betriebsdruck beaufschlagt oder zum Tankdruck entlastet wird. Dazu ist das Pilotventil über die Druckleitung 14 an die Druckleitung 56 angeschlossen und über die Tankleitung 15 an die Tankleitung 57. Da das Pilotventil drei schaltbare Anschlüsse 14, 15 und 67 aufweist und zwei Schaltstellungen einnehmen kann, gehört es zur Gruppe der 3/2-Wegeventile.

Ähnlich zum Steuerschieber besitzt das Pilotventil 68 zwei Antriebsflächen, wobei eine erste Fläche, die Rückstellfläche 69, über die Druckleitung 56 konstant mit dem Betriebsdruck beaufschlagt ist und eine dieser entgegengerichte, flächengrößere zweite Fläche, die Steuerfläche 70, wahlweise mit dem Betriebsdruck beaufschlagt oder zum Tankdruck entlastet wird. Durch die unterschiedliche Größe der Antriebsflächen kann der Ventilschieber des Pilotventils bei entsprechender Druckbeaufschlagung der Flächen in eine seiner Schaltstellungen verschoben werden.

Die Steuerfläche 70 des Pilotventils ist an eine Langhubleitung 71 angeschlossen, die so in den Zylinderraum 49, in dem der Schlagkolben geführt ist einmündet, dass sie abhängig von der Kolbenposition mit dem Betriebsdruck beaufschlagt oder zum Tankdruck entlastet wird. In der unteren Umkehrposition, in der der Schlagkolben im normalen Betriebszustand auf das Werkzeug trifft, wird die Einmündung der Langhubleitung 71 über eine zwischen den Antriebsflächen des Schlagkolbens angeordnete Umfangsnut 72 mit einer ebenfalls in den Arbeitszylinder einmündenden Tankleitung 73, in der ein niedriger Druck herrscht, verbunden, wodurch die Steuerfläche 70 des Pilotventils zum Tank 55b entlastet wird und der Ventilschieber des Pilotventils 68 eine erste Endlage einnimmt (Rückhubposition). Die Tankleitungen 57 und 73 werden innerhalb des Schlagwerks zusammengeführt und münden in einen gemeinsamen Tank des Trägergerätes, der hier der Übersichtlichkeit halber als zwei Tanks 55, bzw. 55a dargestellt ist. Befindet sich das Pilotventil in einer ersten Schaltstellung, der Rückhubposition, verbindet es die Umsteuerleitung 67 mit der Tankleitung 15, der Druck in der Umsteuerleitung und auf der Antriebsfläche 66 des Steuerschiebers fällt ab. Aufgrund des auf der Rückstellfläche 65 des Steuerschiebers konstant anstehenden Betriebsrucks wird der Steuerschieber in die Schaltstellung, die als Rückhubposition bezeichnet wird, geschaltet. Der Steuerschieber verbindet über die Wechseldruckleitung 74 die obere Antriebsfläche 59 des Schlagkolbens mit der Tankleitung 57. Aufgrund des auf der unteren Antriebsfläche 60 des Schlagkolbens konstant anstehenden Betriebsdrucks, wird der Schlagkolben entgegen der Schlaghubrichtung nach oben verschoben. Über eine Rücklaufdrossel 62 strömt das von der oberen Kolbenantriebsfläche verdrängte Öl gedrosselt zum Tank, wodurch im Rückhub ein für einen ruhigen Lauf erforderliches Druckniveau auf der oberen Antriebsfläche aufrecht gehalten wird.

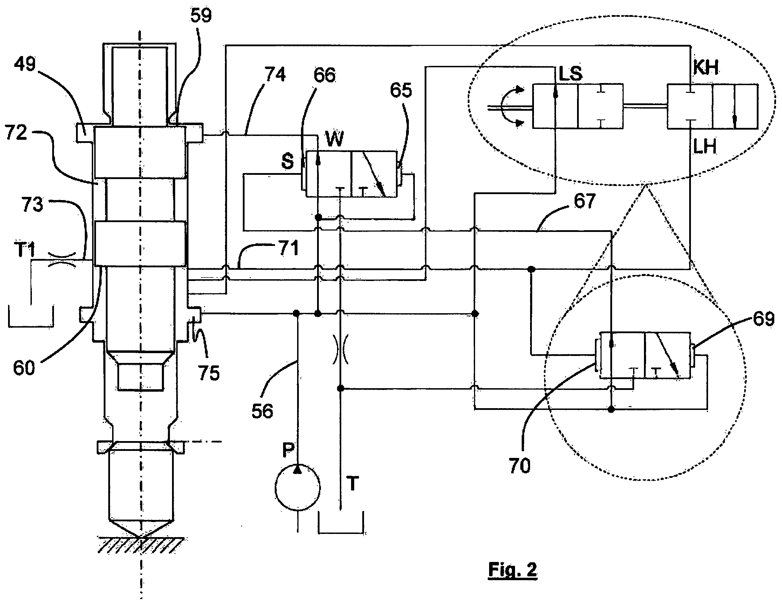

### Beschreibung der Fig. 2:

Bewegt sich der Schlagkolben während des Rückhubs aus der Aufschlagposition nach oben, so verdeckt er wieder die in den Zylinderraum 49 mündende Langhubleitung 71 , um sie nach einem Kolbenweg, der als Langhub bezeichnet wird, nahe des oberen Umkehrpunktes zur unteren Antriebskammer 75 freizugeben. Da die untere Antriebskammer an die Druckleitung 56 angeschlossen ist in der der Betriebsdruck herrscht, wirkt dieser Betriebsdruck nun auch in der Langhubleitung 71 und auf die Steuerfläche 70 des Pilotventils. Da die Steuerfäche 70 flächenmäßig größer ist als die Rückstellfläche 69, wirkt trotz gleichen Drucks auf beiden Flächen eine resultierende Kraft auf den Ventilschieber, die ihn in die andere Schaltstellung, die Schlaghubposition schaltet. Das Pilotventil verbindet nun die Umsteuerleitung 67 und somit die Steuerfläche 66 des Steuerschiebers mit der Druckleitung 14. Da die Steuerfäche 66 flächenmäßig größer ist als die Rückstellfläche 65, wirkt trotz gleichen Drucks auf beiden Flächen eine resultierende Kraft auf den Steuerschieber, die ihn in die andere Schaltstellung, die Schlaghubposition schaltet. Der Steuerschieber verbindet nun über die Wechseldruckleitung 74 die obere Antriebsfläche 59 des Schlagkolbens mit der Druckleitung 56. Da die obere Antriebsfäche 59 flächenmäßig größer ist als die untere Antriebsfläche 60, wirkt trotz gleichen Drucks auf beiden Flächen eine resultierende Kraft auf den Schlagkolben, die ihn in Schlaghubrichtung, auf den Meißel zu beschleunigt. Während des Schlaghubs verdeckt der Kolben wieder die Langhubleitung und verbindet diese, wie oben beschrieben, über die Umfangsnut 72 wieder mit der Tankleitung 73, kurz bevor der Kolben auf den Meißel trifft. Es erfolgt anschießend wieder ein Rückhub usw.

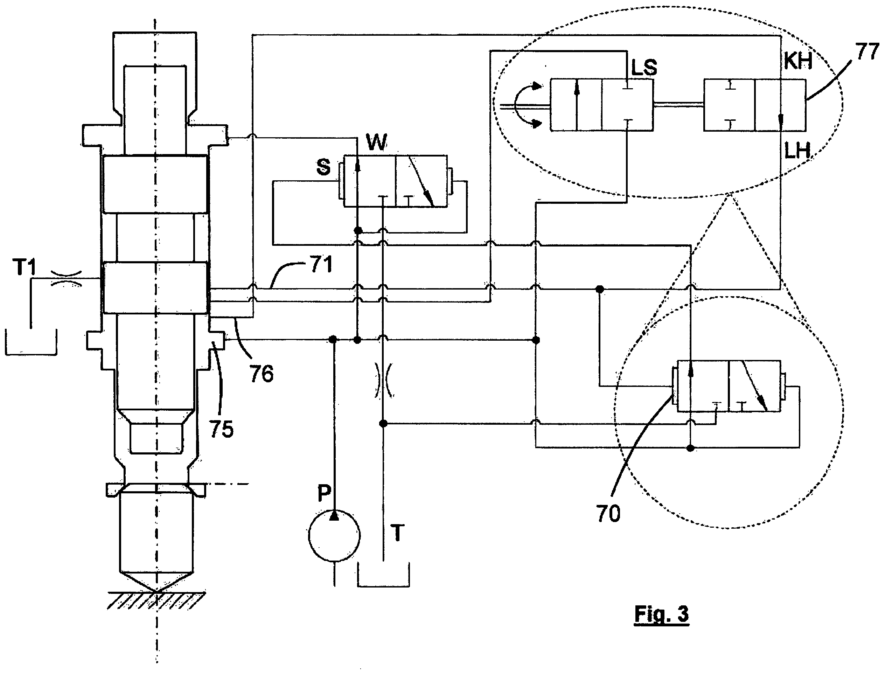

### Beschreibung der Fig. 3:

Hydraulische Schlagwerke können mit einem Hubumschaltventil ausgerüstet sein, welches manuell schaltbar ist und bewirkt, dass der Schlagkolben je nach Schaltstellung Hübe mit unterschiedlich langem Hub ausführt. Durch eine Reduzierung des Hubs, wird die Zeit, während der der Kolben im Schlaghub beschleunigt wird verkürzt, wodurch die Geschwindigkeit des Kolbens zum Zeitpunkt des Aufschlags auf den Meißel ebenfalls reduziert wird. Die geringere Auftreffgeschwindigkeit bewirkt eine geringere Einzelschlagenergie, die bei weniger hartem zu zerstörenden Material ausreichend ist. Aufgrund der kürzeren Beschleunigungszeit kann der Schlagkolben nach kürzerer Zeit wiederholt Schläge ausführen, d.h. die Arbeitsfrequenz steigt, was die Produktivität des Schlagwerks bei weicherem Material erhöht.

Neben der Langhubleitung 71 weist das Schlagwerk eine Kurzhubleitung 76 auf, die bei der in der Skizze dargestellten Ausrichtung des Schlagwerks, unterhalb der Langhubleitung angeordnet ist. Über das Hubumschaltventil 77 kann in einer Schaltstellung, der Kurzhubposition, die Kurzhubleitung 76 mit der Langhubleitung 71 verbunden werden, bzw. in der anderen Schaltstellung, der Langhubposition, von ihr getrennt werden. Wird nach dem Aufschlag des Schlagkolbens auf den Meißel der Schlagkolben während des Rückhubs nach oben gehoben, wird die Kurzhubleitung nach einem gegenüber dem Langhub reduzierten Kolbenweg, der als Kurzhub bezeichnet wird, vom Kolben freigegeben und mit dem in der unteren Antriebskammer 75 herrschenden Betriebsdruck beaufschlagt. Der Betriebsdruck wird nun über die Kurzhubleitung 76, das in Kurzhubposition stehende Hubumschaltventil 77 in die Langhubleitung 71 und somit auf die Steuerfläche 70 des Pilotventils geleitet. Wie oben beschrieben, schalten das Pilotventil und dadurch ausgelöst, der Steuerschieber jeweils in ihre als Schlaghubposition bezeichnete Schaltstellungen, wodurch der Schlagkolben seine Bewegungsrichtung umkehrt und einen Schlaghub mit reduziertem Hub, dem Kurzhub, ausführt. Befindet sich das Hubumschaltventil in der Langhubposition, in der die Verbindung zwischen der Kurzhub- und Langhubleitung getrennt ist, bewirkt eine Druckänderung in der Kurzhubleitung keine Umschaltung der Ventile.

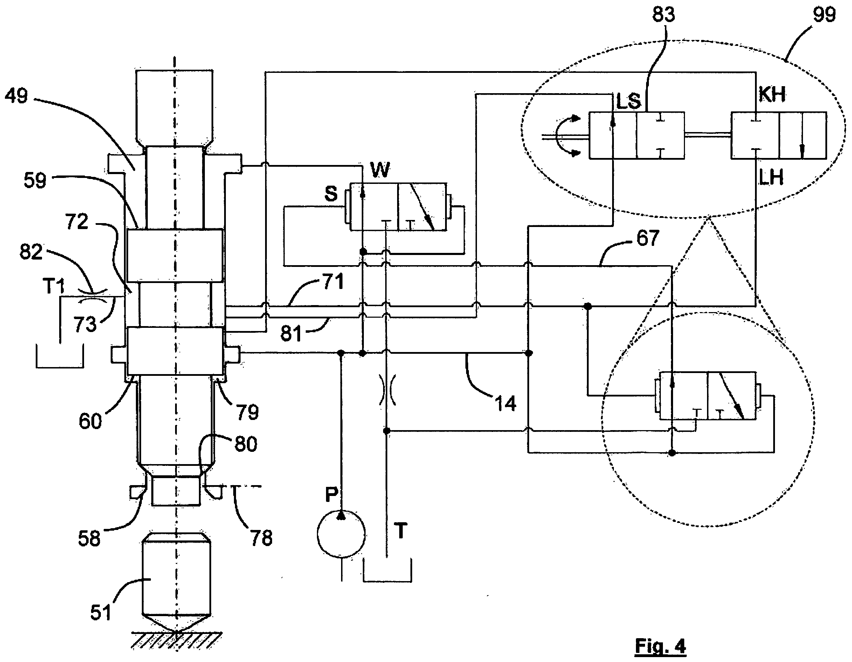

### Beschreibung der Fig. 4:

Wird das Schlagwerk vom Trägergerät nicht ausreichend angedrückt, liegt der Meißel nicht am Material an oder durchbricht der Meißel das Material, so entfernt sich der Meißel 51 von seiner Anlagefläche in dem Gehäuse, dem Meißelanschlag 58. Ein sogenannter Leerschlag tritt auf, bei dem der Kolben während des Schlaghubs seine theoretische Aufschlagposition überfährt. Als theoretische Aufschlagposition wird die Kolbenposition bezeichnet, bei der der Schlagkolben den Meißel trifft, wenn der Meißel am Gehäuseanschlag 58 anliegt. Die Strich-Punkt-Linie 78 kennzeichnet die Ebene senkrecht zur Bewegungsrichtung des Schlagkolbens, in der sich das vordere Schlagkolbenende, bzw. das obere Meißelende befinden, wenn sich der Schlagkolben in der theoretischen Aufschlagposition befindet, bzw. der Meißel ausreichend angedrückt wird.

Bei einem Leerschlag trifft der Kolben teilweise nicht auf den Meißel und die hohe kinetische Energie des Schlagkolbens kann nicht über den Meißel in das zu zerstörende Material eingeleitet werden. Wenn der Schlagkolben seine theoretische Aufschlagposition um eine vorbestimmte Wegstrecke überfährt, taucht die untere Antriebsfläche 60 in ein hydraulisches Fangpuffer 79 ein, wodurch er verzögert abgebremst wird, bevor er durch einen im Gehäuse des Schlagwerks angeordneten mechanischen Kolbenanschlag 80 gestoppt wird. Durch den Fangpuffer wird der Schlagkolben verzögert abgebremst und seine hohe kinetische Energie wird zeitlich gestreckt in die Schlagwerkskomponenten eingeleitet, was schweren Schäden an den Komponenten und Dichtungen verhindert. Trotz des hydraulischen Fangpuffers stellt diese Betriebssituation gerade bei Schlägen mit langem Hub (Langhubmodus), eine hohe Belastung für die Mechanik und die Dichtungen dar, die möglichst vermieden werden soll, um die Lebensdauer der Komponenten nicht zu verkürzen.

Um die wiederholte Ausführung von Leerschlägen zu verhindern, wird der Steuerschieber auf Schlaghub geschaltet, wenn der Schlagkolben seine theoretische Aufschlagposition in Schlaghubrichtung um eine vorbestimmte Wegstrecke überfährt. Dazu mündet eine Leerschlagleitung 81 so in den Zylinderraum 49, dass die Umfangsnut 72 auf dem Schlagkolben mit der Leerschlagleitung verbunden wird, wenn der Schlagkolben seine theoretische Aufschlagposition um eine vorbestimmte Wegstrecke überfährt. Neben der Leerschlagleitung ist die Umfangsnut weiterhin mit der Langhubleitung 71 und der Tankleitung 73 verbunden. Um Leerschläge zu verhindern ist die Leerschlagleitung 81 über ein Leerschlagsicherungsventil 83 an die Druckleitung 14 angeschlossen. Das Leerschlagsicherungsventil 83 ist Teil eines Drehschieberventils 99, welches neben der Schaltfunktion Leerschlagsicherung noch eine weitere Schaltfunktion aufweist. Unter Druck stehendes Öl aus der Leerschlagleitung 81 fließt nun über die Umfangsnut 72 in die Langhubleitung 71 und in die Tankleitung 73. Da die Tankleitung 73 aufgrund der Drossel 82 einen größeren Drosselwiderstand aufweist als die Leerschlagleitung 81, stellt sich aufgrund der unterschiedlichen Drosselwiderstände in der Umfangsnut und somit in der Langhubleitung ein Druck ein, der niedriger ist als der in der Druckleitung 14, bzw. 56 anstehende Betriebsdruck ist, aber für die Umschaltung des Pilotventils in Schlaghubstellung ausreichend hoch ist. Wie oben beschrieben, wird durch die Umschaltung des Pilotventils die Umschaltung des Steuerschiebers in die Schaltstellung Schlaghubposition ausgelöst, was die Druckbeaufschlagung der obere Kolbenantriebsfläche 59 bewirkt wodurch sich der Kolben weiter in Schlaghubrichtung bewegt, bis er an dem mechanischen Kolbenanschlag 80 zur Anlage kommt und gestoppt wird. Das Schlagwerk ist somit abgeschaltet, es werden keine weiteren Schläge ausgeführt. Diese Abschaltung des Schlagwerks nach dem Auftreten eines Leerschlags wird als Leerschlagsicherung bezeichnet. Das Schlagwerk führt erst dann wieder Schläge aus, wenn der Schlagkolben mechanisch, über die Verschiebung des Meißels, soweit entgegen der Schlaghubrichtung angehoben wird, bis die Umfangsnut 72 nicht mehr mit der Leerschlagleitung verbunden ist und der in der Leerschlagleitung 81 herrschende Betriebsdruck nicht mehr in die Langhubleitung 71 geleitet wird.

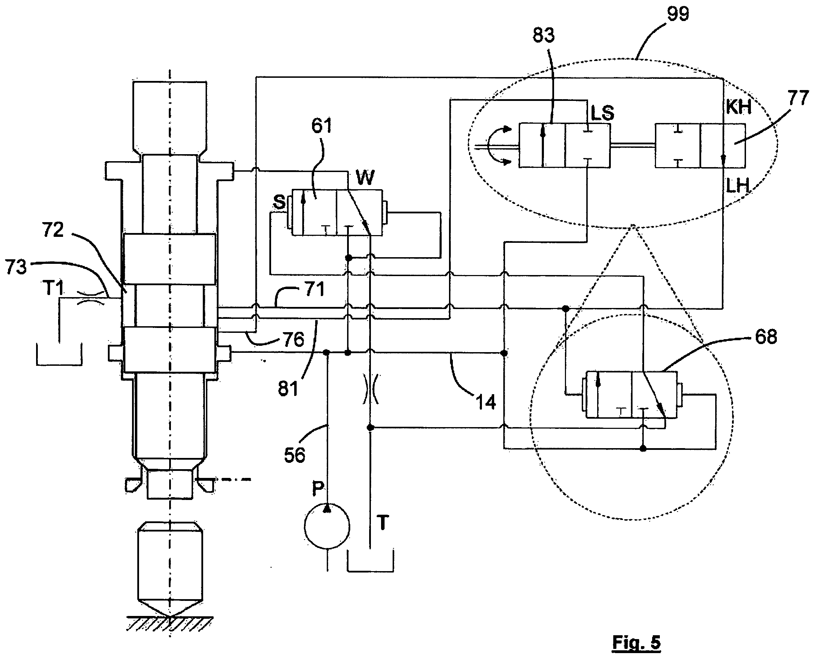

### Beschreibung der Fig. 5:

Da die Vermeidung von Leerschlägen bei reduziertem Hub, dem Kurzhub, aufgrund der verringerten Einzelschlagenergie nicht erforderlich ist, wird über das Leerschlagsicherungsventil 83, welches die Verbindung zwischen der Leerschlagleitung 81 und der Druckleitung 14 bzw. 56 je nach Schaltstellung trennen oder verbinden kann, getrennt. Wenn der Schlagkolben bei Leerschlägen seine theoretische Aufschlagposition überfährt, wird die Langhubleitung 71 stets über die Umfangsnut 72 mit der Tankleitung 73 verbunden und vom hohen Druck entlastet, sodass das Pilotventil und dadurch ausgelöst, der Steuerschieber 61 jeweils in die als Rückhubposition bezeichneten Schaltstellungen geschaltet werden. Der Schlagkolben führt nun wiederholt Rück- und Schlaghübe aus, so lange wie ihm unter Druck stehendes Öl über die Druckleitung 56 zugeführt wird. Um nur im Betriebsmodus Kurzhub die Durchführung wiederholender Leerschläge zuzulassen, sind die beiden Ventilfunktionen Leerschlagsicherung und Hubumschaltung in einem gemeinsamen Drehschieberventil 99 zusammengefasst und die Ventilfunktionen so gekoppelt, dass die Leerschlagleitung 81 nur dann über das in Leerschlagsicherungsventil 83 von der Druckleitung 14 getrennt ist (Leerschlagsicherung deaktiviert, Leerschläge möglich), wenn das Hubumschaltventil 77 die Verbindung der Kurzhubleitung 76 zur Langhubleitung 71 herstellt (nur Kurzhübe möglich). Dazu weist das Drehschieberventil zwei Schaltfunktionen auf, eine für die Funktion Leerschlagsicherung und eine für die Funktion Hubumschaltung.

Folgende Schaltkombinationen sind möglich:

| | |
|---|---|
| • Normalhub (Langhub), | Leerschlagsicherung aktiviert (Abschaltung) |
| • Kurzhub, | Leerschlagsicherung deaktiviert (Normalbetrieb) |

Die mit gestrichelter Linie dargestellte Ellipse verdeutlicht, dass die Schaltfunktionen Leerschlagsicherung und Hubumschaltung in einem Drehschieberventil 99 zusammengefasst sind. Da das Drehschieberventil vier Anschlüsse 14, 71, 76, 81 aufweist und zwei Schaltstellungen einnehmen kann, gehört es zur Gruppe der 4/2-Wegeventile.

Der mit gestrichelter Linie dargestellte Kreis und die spitz auf die Ellipse zulaufenden Linien stellen dar, dass das Pilotventil 68 in dem Drehschieberventil 99 integriert ist.

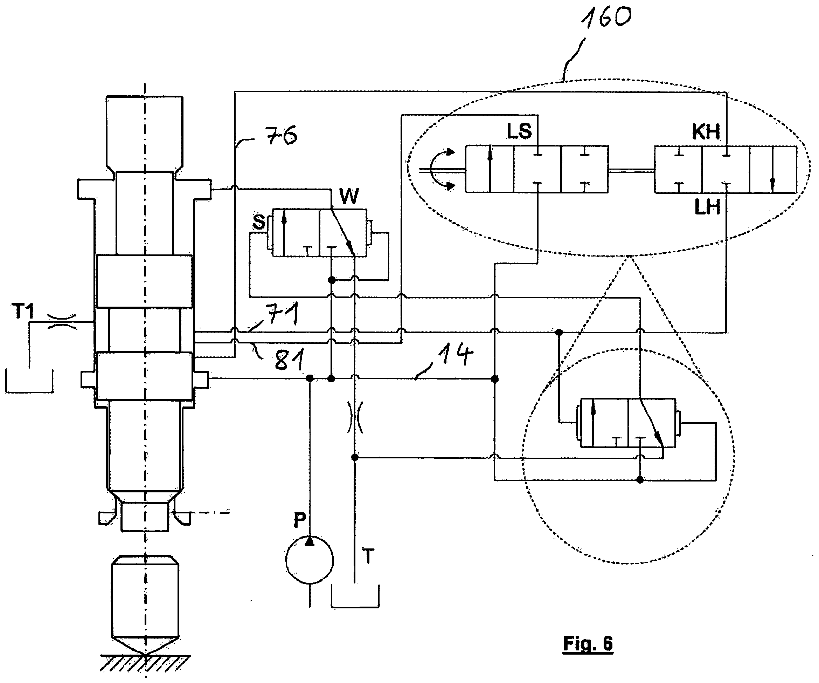

### Beschreibung der Fig. 6:

Gegenüber der Ausführung nach Fig. 5 unterscheidet sich diese Ausführung dadurch, dass das Drehschieberventil 160 drei Schaltstellungen einnehmen kann. Neu dazugekommen ist die in der Skizze dargestellte mittlere Schaltstellung, in der die Kurzhubleitung 76 von der Langhubleitung 71 und die Leerschlagleitung 81 von der Druckleitung 14 getrennt ist. Somit ist die Durchführung von wiederholten Leerschlägen auch möglich, wenn das Schlagwerk Schlaghübe mit langem Hub (Langhub) ausführt. Eine solche Einstellung führt bei einigen Anwendungen, in denen der Meißel aufgrund der instabilen Lage des zu zerstörenden Materials, nicht feste gegen das Material gedrückt werden kann, aber eine hohe Einzelschlagenergie erforderlich ist, zu einer erhöhten Produktivität. Die bei Leerschlägen im Langhubmodus auftretenden höheren Belastungen werden in Kauf genommen.
Da das Drehschieberventil vier Anschlüsse 14, 71, 76, 81 aufweist und drei Schaltstellungen einnehmen kann, gehört es zur Gruppe der 4/3-Wegeventile.

Folgende Schaltkombinationen sind möglich:

| | |
|---|---|
| • Normalhub (Langhub), | Leerschlagsicherung aktiviert (Abschaltung) |
| • Normalhub (Langhub), | Leerschlagsicherung deaktiviert (Normalbetrieb) |
| • Kurzhub, | Leerschlagsicherung deaktiviert (Normalbetrieb) |

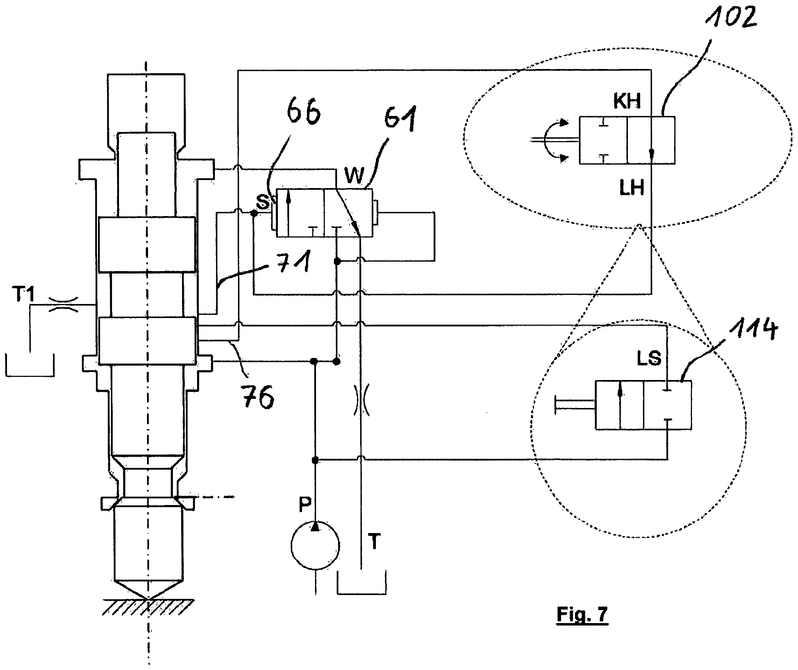

### Beschreibung der Fig. 7:

Gegenüber der Ausführung nach Fig. 5 unterscheidet sich diese Ausführung dadurch, dass kein Pilotventil verwendet wird, sondern die Langhubleitung 71 gleichzeitig als Umsteuerleitung wirkt und Drucksignale in der Langhubleitung direkt auf die Steuerfläche 66 des Steuerschiebers wirken. Weiterhin sind die Funktionen Hubumschaltung und Leerschlagsicherung nicht gekoppelt, sondern können unabhängig voneinander geschaltet werden. Das Hubumschaltungsventil ist als Drehschieberventil 102 ausgeführt, in dem als Längsschieberventil ein Leerschlagsicherungsventil 114 angeordnet ist. Da das Drehschieberventil 102 und auch das Längsschieberventil 114 jeweils zwei Anschlüsse aufweist und jeweils zwei Schaltstellungen einnehmen können, gehörten sie zur Gruppe der 2/2-Wegeventile. Das Längsschieberventil kann auch als Sitzventil ausgeführt werden, um in der Geschlossen-Stellung die Anschlüsse leckagefreie voneinander zu trennen.

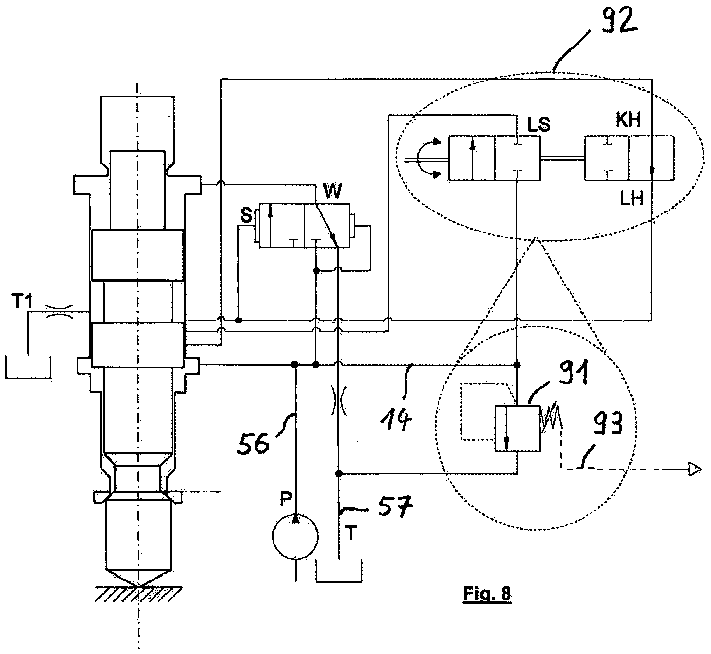

### Beschreibung der Fig. 8:

Gegenüber der Ausführung nach Fig. 5 ist diese Steuerung ohne Pilotventil ausgeführt, wie bereits zu Fig. 7 beschrieben wurde. In dem Drehschieber 92 ist hier jedoch ein Druckbegrenzungsventil 91 integriert, welches als Sitzventil oder Längsschieberventil ausgeführt sein kann, wobei jedoch in beiden Fällen das Ventilelement des Druckbegrenzungsventils bei Betätigung eine lineare Bewegung ausführt. Das Druckbegrenzungsventil wird nicht manuell betätigt, sondern vom dem in der Druckleitung 14 herrschenden Druck betätigt, der das Ventilelement gegen die einstellbare Kraft einer Feder verschiebt. Übersteigt der Druck einen voreingestellten Wert, der von der Vorspannkraft der Feder abhängig ist, so öffnet das Druckbegrenzungsventil eine Verbindung zwischen der Druckleitung 14 und der Tankleitung 57, sodass der Betriebsdruck begrenzt wird und eine Überlastung des Schlagwerks durch einen Betrieb mit zu hohem Druck verhindert wird. Damit der möglicherweise schwankende Druck in der Tankleitung 57 den Öffnungsdruck nicht beeinflusst, ist das Ventil mit einer Entlastungsleitung 93 ausgeführt, die eine der Steuerfläche entgegengerichtete Antriebsfläche des Ventilelementes zur Atmosphäre verbindet. Nicht dargestellte Dichtungen verhindern Leckagen zwischen den mit Öl beaufschlagten Flächen und der zur Atmosphäre verbundenen Fläche des Druckbegrenzungsventils, um einen Ölaustritt in die Atmosphäre zu verhindern. Nicht dargestellte Rückschlagventile können ein Eindringen von Feuchtigkeit aus der Atmosphäre in die Entlastungsleitung verhindern.

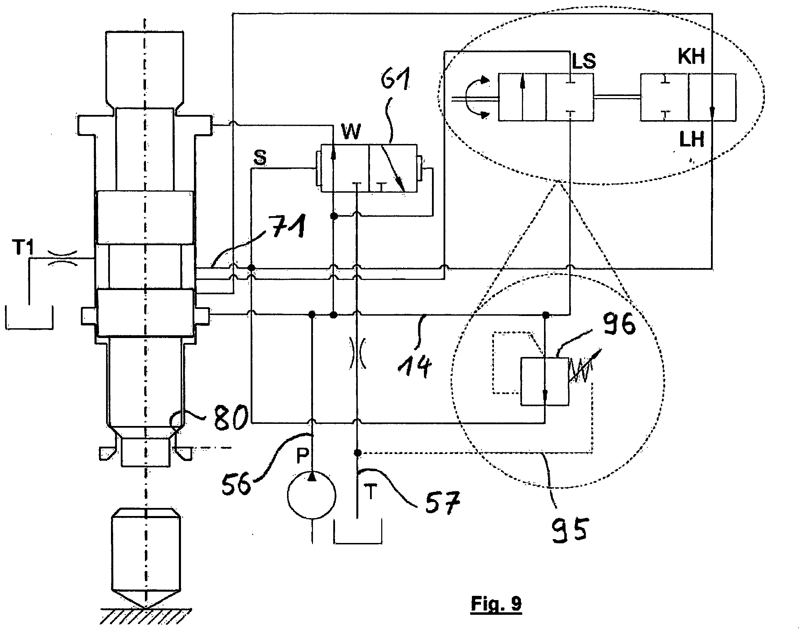

### Beschreibung der Fig. 9:

Gegenüber der Ausführung nach Fig. 8 wird das Schlagwerk bei Überschreitung des zulässigen Betriebsdrucks abgeschaltet, in dem ein Druckschaltventil 96 eine Verbindung zwischen der Druckleitung 14 und der Langhubleitung 71 herstellt. Bei ausreichend groß dimensioniertem Querschnitt des Druckschaltventils wird nach Überschreitung des zulässigen Betriebsdrucks über das geöffnete Druckventil 96 eine solche Menge Öl aus der Druckleitung in die Langhubleitung zugeführt, dass der sich in der Langhubleitung einstellende Druck ausreicht, um den Steuerschieber 61 in die Schaltstellung Schlaghubposition zu schalten. Der Schlagkolben wird weiter in Schlaghubrichtung bewegt, bis er an dem Kolbenanschlag 80 gestoppt wird. Das Schlagwerk führt, trotz eines hohen anliegenden Druckes in der Druckleitung 56, keine weiteren Schläge mehr aus, eine mechanische Überlastung wird verhindert und dem Anwender wird durch das Anhalten des Hammerbetriebs signalisiert, dass die zugeführte Ölmenge und der anstehende Öldruck die zulässigen Grenzwerte überschritten haben. Die Entlastungsleitung 95 des Druckschaltventils ist an die Tankleitung angeschlossen. Das Druckschaltventil ist in dem Drehschieber integriert.

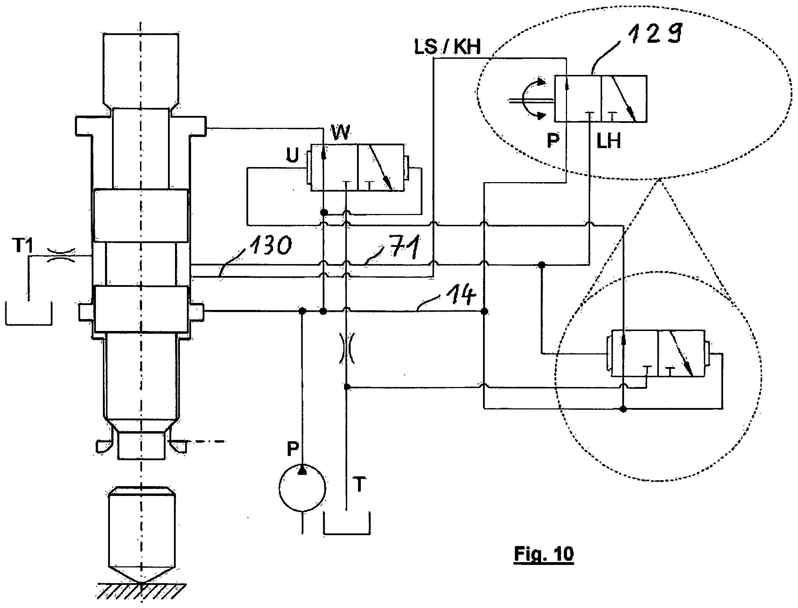

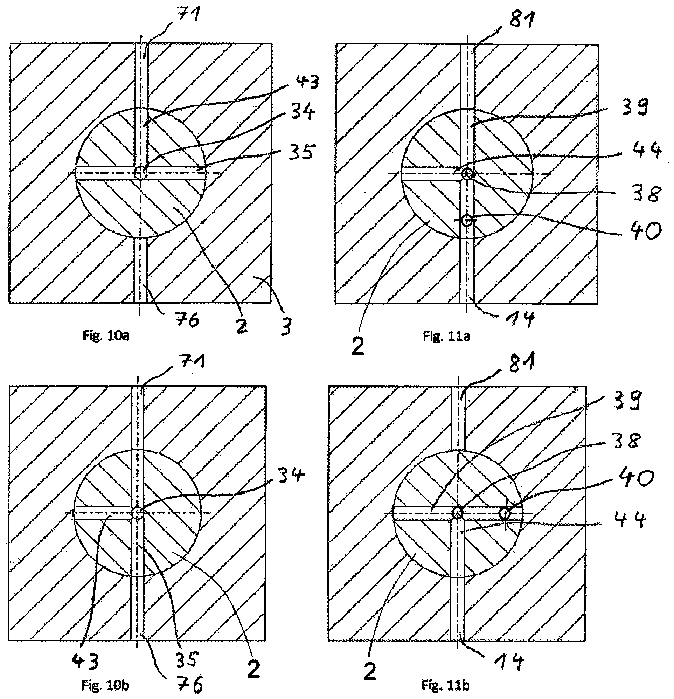

### Beschreibung der Fig. 10:

Gegenüber der Ausführung nach Fig. 4 wird hier anstelle der zwei getrennten Leitungen Leerschlagleitung und Kurzhubleitung eine gemeinsame Signalleitung 130 verwendet, die je nach Schaltstellung eines Umschaltventils 129 entweder in der Schaltstellung Leerschlagsicherung (Abschaltung) mit der Druckleitung 14 verbunden wird, um die Funktion einer Leerschlagleitung zu übemehmen, oder in der anderen Schaltstellung, der Kurzhubposition, mit der Langhubleitung 71 verbunden wird, um die Funktion einer Kurzhubleitung zu übernehmen. Somit ist die Funktion Leerschlagsicherung nur im Betriebsmodus Langhub aktiviert, da die Signalleitung 130 mit der Druckleitung 14 verbunden ist. Wird das Umschaltventil 129 in die Schaltstellung Kurzhub geschaltet, so führt das Schlagwerk auch dann wiederholt Arbeitszyklen und Schläge aus, jedoch mit reduziertem Hub, dem Kurzhub, da die Signalleitung nicht mit einer Druckleitung verbunden ist, sondern mit der Langhubleitung. Da das Drehschieberventil drei Anschlüsse 14, 71, 130 aufweist und zwei Schaltstellungen einnehmen kann, gehört es zur Gruppe der 3/2-Wegeventile.

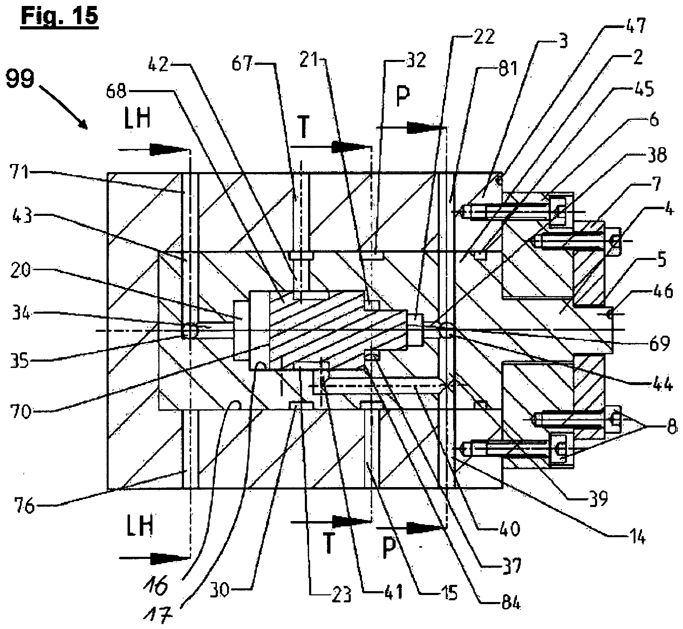

### Beschreibung der Fig. 15:

Dargestellt ist der Schnitt durch eine vereinfachte Darstellung eines Drehschieberventils 99 mit integriertem, als Längsschieberventil ausgeführtem Pilotventil 68. In einem Gehäuse 3, welches als Ausschnitt dargestellt ist und Teil des Zylinderdeckels, des Zylinders, eines an dem Zylinderdeckel oder Zylinder angebauten Steuerblocks oder sonstiger Teile des Schlagwerkgehäuses sein kann, ist in einer Aufnahmebohrung 16 ein Drehschieber 2 eingebaut. Der Drehschieber 2 wird in dem Gehäuse über einen Deckel 6, der die Aufnahmebohrung nach außen abschließt, gegen Verschiebung in axialer Richtung gesichert. Der Deckel wird über Schauben 8, die in Gewindebohrungen des Gehäuses 3 eingreifen befestigt. Der Drehschieber 2 besitzt auf der zum offenen Ende der Aufnahmebohrung 16 zeigenden Seite einen Zapfen 4, an dessen Ende symmetrisch zur Ventilachse 4 vier Schlüsselflächen 5 angeordnet sind und einen Vierkant bilden. An die Schlüsselflächen 5 kann bspw. ein nicht dargestelltes Werkzeug angesetzt werden, um den Drehschieber 2 in eine andere Position zu drehen. Die Schlüsselflächen 5 werden auch dazu genutzt, den Drehschieber 2 nach dem Erreichen einer seiner Schaltstellungen gegen Verdrehung zu sichern, in dem eine Arretierungsplatte 7, welches mittig eine Ausnehmung aufweist, die eine dem mit Schlüsselflächen 5 versehenen Zapfen 4 ähnliche Innenkontur aufweist, sodass die Platte mit der Ausnehmung über den Zapfen 4 mit den Schlüsselflächen 5 geschoben werden kann und die Innenflächen der Ausnehmung die Schlüsselflächen 5 mit geringen Abstand umschließen. Würde sich der Drehschieber 2 geringfügig drehen, so würden die Schlüsselflächen 5 des Zapfens 4 mit den Kanten an die Innenflächen der Ausnehmung stoßen. Dieser Formschluss verhindert eine weitere Drehung des Zapfens 4 und somit des Drehschiebers 2. Die Arretierungsplatte 7 weist weiterhin zwei Bohrungen auf, durch die Schrauben 8 gesteckt werden können um die Platte verdrehsicher an dem Deckel zu befestigen, wobei die Schrauben mit ihren Außengewindeflächen in Innengewindeflächen von Bohrungen des Deckels eingreifen. Die Arretierungsplatte 7 kann bei entfernten Schrauben auch als Werkzeug benutzt werden, um den Drehschieber 2 zu drehen, indem eine Drehbewegung der Platte, über die Schlüsselflächen 5 auf den Zapfen und somit auf den Drehschieber übertragen wird. Der Deckel kann 4 jeweils 90° auf einem Teilkreisdurchmesser versetzte Gewindebohrungen aufweisen, wodurch das Blech nach dem Schalten, d.h. Verdrehen des Drehschiebers um 90° und somit Umschaltung in die andere Schaltstellung, am Deckel befestigt werden kann, ohne es von dem Zapfen 4 abzuziehen. In einer Dichtungsnut 45 ist eine nicht dargestellte Dichtung eingesetzt, um den Innenraum der Aufnahmebohrung nach außen hin abzudichten. Der Drehschieber 2 und der Deckel können mit weiteren nicht dargestellten Dichtungsnuten und Dichtungen ausgestattet sein, um Leckagen entlang der Außenmantelfläche des Drehschiebers 2 zu vermeiden.

Anstelle eines mit Schrauben am Gehäuse befestigten Deckels 6 sind auch andere nicht dargestellte Ausführungen möglich, um den Drehschieber 2 axial in der Aufnahmebohrung zu sichern und die Aufnahmebohrung zu verschließen, bspw. durch eine Gewindehülse, die wie der Deckel 6 eine mittige Bohrung aufweist, durch die der Zapfen des Drehschiebers 2 nach außen geführt wird und die eine Außengewindefläche aufweist und in einen mit Innengewinde versehenen Bereich der im Durchmesser gestuften Aufnahmebohrung im Gehäuse befestigt wird. Die Hülse kann an der nach außen zeigenden Stirnfläche symmetrisch zur Ventilachse angeordnete, sich gegenüberliegend axiale Bohrungen aufweisen, in die Zapfen eines Werkzeugs (Zweilochmutterndreher) eingreifen können, um die Hülse zu drehen. Es können aber auch Schlüsselflächen 5 an der Außenmantelfläche der Hülse in Form eines Vielkants angeordnet werden, die sich über eine begrenzte axiale Länge der Hülse erstrecken. Ein hülsenförmiges Werkzeug (Steckschlüsseleinsatz) mit entsprechend ausgeführten Innenflächen kann zum Verdrehen der Hülse über die Schlüsselflächen geschoben und die Hülse so verdreht werden.

Zum Erkennen der eingestellten Schaltposition ist eine Markierung in Form einer kleinen Bohrung 46 auf der Stirnfläche des Zapfens angeordnet, wobei die Bohrung radial zur Drehachse des Ventils versetzt angeordnet ist. Im Gehäuse oder Deckel können ähnliche Markierungen 47 vorgesehen werden, um eine Referenz, bzw. Anhaltspunkt zu erhalten. Anstelle von kleinen Bohrungen können bspw. auch Nuten im Drehschieber 2 und Deckel, bzw. Gehäuse angeordnet werden.

Der Drehschieber 2 besitzt radiale Bohrungen 35, 37, 39, 42, 43, 44 und Nuten 30, 32 auf seiner äußeren Mantelfläche, die je nach Position des Drehschiebers 2 mit Bohrungen 71, 76, 81, 84 des Gehäuses in Verbindung gebracht oder von Ihnen getrennt werden können oder teilweise auch konstant mit Bohrungen 14, 15, 67 des Gehäuses in Verbindung stehen.

Der dargestellte Drehschieber 2 besitzt zwei Schaltfunktionen, deren dazugehörige Schaltkanten in unterschiedlichen, senkrecht zur Drehschieberachse angeordneten und zueinander beabstandeten Ebenen angeordnet sind. Eine erste Schaltfunktion ist für die Hubumschaltung des Schlagwerks zuständig eine zweite für die Leerschlagsicherung. In dem Gehäuse sind für jede Schaltfunktion radial zur Aufnahmebohrung gegenüberliegend jeweils zwei Bohrungen angeordnet, Langhubbohrung 71 und Kurzhubbohrung 76, bzw. Druckbohrung 14 und Leerschlagbohrung 81. Für die Schaltfunktion Hubumschaltung weist der Drehschieber 2 radiale Bohrungen 35, 43 auf, die so angeordnet sind, dass in einer Schaltposition des Drehschiebers 2, der Langhubposition, die Kurzhubleitung 76 von der Außenmantelfläche des Drehschiebers 2 verdeckt und abgesperrt ist. Gegenüberliegend verbindet die radiale Bohrung 43 die Langhubleitung 71 mit der axialen Bohrung 34, die zur Steuerfläche 70 des Pilotventils 68 führt. Somit werden nur Drucksignale aus der Langhubleitung 71 auf die Steuerfläche des Pilotventils 68 geleitet, nicht jedoch aus der Kurzhubleitung 76.

Für die Schaltfunktion Leerschlagsicherung weist der Drehschieber 2 in einer anderen Ebene radiale Bohrungen 39, 44 auf, die so angeordnet sind, dass in einer Schaltstellung des Drehschiebers 2, der Langhubposition, die Leerschlagleitung 81 über die radiale Bohrung 39 des Drehschiebers 2 mit der Druckleitung 14 verbunden ist, in der der Betriebsdruck ansteht. Somit steht in der Leerschlagbohrung 81 während des Betriebs des Schlagwerks im Betriebsmodus Langhub der Betriebsdruck an und bewirkt die Aktivierung der Funktion Leerschlagsicherung. Durch den in der Leerschlagleitung anstehenden Betriebsdruck wird die Ausführung weitere Arbeitszyklen des Schlagwerks unterbunden, wenn der Schlagkolben die theoretische Aufschlagposition in Schlaghubrichtung um eine vorbestimmte Wegstrecke überfährt und die Umfangsnut des Schlagkolbens die Leerschlagbohrung mit der Langhubbohrung verbindet. Somit ist die Leerschlagsicherung im Betriebsmodus Langhub aktiviert.

### Beschreibung der Fig. 10a, 10b, 11a und 11b:

Die Skizzen 10a und 10b, bzw. 11a und 11b zeigen jeweils einen Querschnitt des Ventils in einer Ebene quer zur Ventilachse und parallel zu den Gehäusebohrungen 71 und 76, bzw. 81 und 14.

Die Figuren 10a und 11a zeigen das Ventil in der oben beschriebenen Schaltstellung, der Langhubposition.

Wenn der Drehschieber aus der in Skizzen 10a, 11a dargestellten Schaltstellung um 90° gegen den Uhrzeigersinn gedreht wird, erreicht der Drehschieber seine zweite Schaltstellung, die Kurzhubposition, wobei die Skizzen 10b, 11b jeweils einen Querschnitt des Ventils in zwei unterschiedlichen Ebenen darstellen.

Für die Schaltfunktion Hubumschaltung (Skizze 10b) verbindet die radiale Bohrung 35, welche den ganzen Drehschieber 2 durchdringt, die axiale Bohrung 34 sowohl mit der Langhubleitung 71 als auch mit der Kurzhubleitung 76. Somit werden Drucksignale aus der Kurzhubleitung, die während der Rückhubbewegung des Schlagkolbens nach einem kürzeren Schlagkolbenweg erzeugt werden und Drucksignale aus der Langhubleitung auf die Antriebsfläche des Pilotventils geleitet, was dazu führt, dass das Schlagwerk Schlaghübe mit kurzem Hub ausführt.

Für die Schaltfunktion Leerschlagsicherung wird in der zweiten Schaltstellung (Skizze 11b) die Verbindung zwischen der Druckleitung 14 und der Leerschlagleitung 81 unterbrochen, da die radiale Bohrung 44 den Drehschieber 2 nicht ganz durchdringt und die Mantelfläche des Drehschiebers die Leerschlagleitung verdeckt.

Somit ist die Leerschlagleitung nicht über das Drehschieberventil an eine Druckleitung angeschlossen, die Leerschlagsicherung ist deaktiviert, wodurch das Schlagwerk auch dann Arbeitszyklen durchführt, wenn der Schlagkolben die theoretische Aufschlagposition in Schlaghubrichtung überfährt. Die Leerschlagsicherung ist dadurch im Betriebsmodus Kurzhub deaktiviert.

### Beschreibung der Fig. 15:

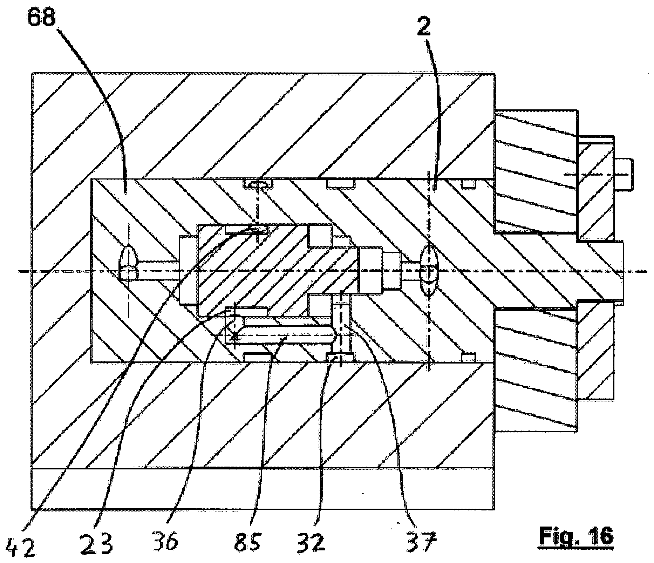

In dem Drehschieber 2 ist ein Pilotventil 68, welches als Längsschieberventil ausgeführt ist, eingebaut. Der Drehschieber 2 weist dazu eine Aufnahmebohrung 17 für den Längsschieber auf, d.h. der Drehschieber stellt das Gehäuse des Pilotventils 68 dar. Das Pilotventil 68 verbindet je nach Schaltstellung die mit der flächengrößeren Steuerfläche des Steuerschiebers verbundene Wechseldruckleitung 67 entweder mit der Druckleitung 14 oder der Tankleitung 15. Die Druckleitung 14 ist über die Druckleitung 56 mit der Pumpe des Baggers verbunden, die Tankleitung 15 über die Tankleitung 57 mit dem Tank des Baggers. In der vereinfachten Skizze ist die Aufnahmebohrung 17 an beiden Enden verschlossen dargestellt. Zur Fertigung und Montage des Längsschiebers weist der Drehschieber 2 eine verschließbare Montageöffnung auf, z.B. in Form einer Verschlussschraube, die zur besseren Übersichtlichkeit nicht dargestellt ist. Ebenso sind die axialen Bohrungen 40 und 85 (Fig. 16) des Drehschiebers 2 zur besseren Übersichtlichkeit nicht bis zu den Stirnseiten geführt.

Der Längsschieber 68 weist eine Rückstellflächen 69, eine ringförmige Entlastungsfläche 84 und eine Steuerfläche 70 auf. Die flächengrößte Fläche 70 ist über die axiale Bohrung 34 mit den radialen Bohrungen 43 und 35 verbunden, um eine Verbindung mit der Langhubleitung 71 und je nach Schaltstellung des Drehschiebers 2 zusätzlich mit der Kurzhubleitung 76 herzustellen. Dieser Steuerfläche 70 ist eine flächenkleinere Rückstellfläche 69 entgegengerichtet, welche konstant über die axiale Bohrung 38 und je nach Schaltstellung des Drehschiebers 2 über eine der radialen Bohrungen 39 oder 44 mit der Druckleitung 14 verbunden ist. Ebenfalls der Steuerfläche 70 entgegengerichtet ist die flächenkleinere Entlastungsfläche 84, die konstant über eine radiale Bohrung 37 und eine auf dem Drehschieber 2 angeordnete Umfangsnut 32 mit der Tankleitung 15 verbunden ist.

Weiterhin weist der Längsschieber an seiner äußeren Mantelfläche eine Umfangsnut 23 auf, die stets mit der radial, in dem Drehschieber 2 angeordneten Bohrung 42 und über die Umfangsnut 30 des Drehschiebers konstant mit der Umsteuerleitung 67 verbunden ist.

Die Umfangsnut 23 ist in der dargestellten Schaltstellung des Längsschiebers, der Schlaghubposition, mit der radial in dem Drehschieber 2 angeordneten Druckbohrung 41 verbunden, die über eine axiale Bohrung 40 und die radialen Bohrungen 39 mit der im Gehäuse angeordneten Druckleitung 14 verbunden ist.

### Beschreibung der Fig. 16:

Im Gegensatz zu dem in der Fig. 15 dargestellten Schnitt durch das Ventil, verläuft der in Fig. 16 dargestellte Schnitt in einer Ebene, die ebenfalls durch die Ventilachse verläuft, aber im Vergleich zum Schnitt 15 winkelig versetzt angeordnet ist, sodass der Schnitt durch die axiale Tankbohrung 85 des Drehschiebers 2 verläuft. Weiterhin ist das Pilotventil 68 in der anderen Schaltstellung, der Rückhubposition, dargestellt. Die Umfangsnut 23 ist in der Rückhubposition nicht mehr mit der Druckbohrung 41 verbunden, sondern mit der radial in dem Drehschieber 2 angeordneten Tankbohrung 36 verbunden, die über eine axiale Tankbohrung 85, die radiale Bohrung 37 und die Umfangsnut 32 mit der Tankleitung 15 verbunden ist. Bei entsprechender Anordnung der Bohrungen und Nuten können die radialen Bohrungen gleichen Druckniveaus, wie bspw. Bohrungen 36 und 37 anstelle über eine axiale Bohrung auch über eine axiale Nut an der äußeren Mantelfläche des Drehschiebers miteinander verbunden werden.

Wenn während des Rückhubs des Schlagkolbens die Langhubbohrung 71 mit dem Betriebsdruck beaufschlagt wird, so wirkt auch auf der Steuerfläche 70 der hohe Betriebsdruck, wodurch der Längsschieber die in der Fig. 15 dargestellte Schaltstellung, nämlich die Schlaghubposition, einnimmt, da der konstant auf der Rückstellfläche 69 wirkende Druck eine Kraft erzeugt, die kleiner ist, als die dieser entgegengerichteten Kraft der größeren Steuerfläche 70. Die Umsteuerleitung 67 wird über die Umfangsnut 23 mit der Druckleitung 14 verbunden, wodurch der Steuerschieber ebenfalls in die Schaltstellung Schlaghubposition geschaltet wird, da seine große Steuerfläche 66 über die Umsteuerleitung mit dem hohe Betriebsdruck beaufschlagt wird.

Wenn zum Ende des Schlaghubs des Schlagkolbens, die Langhubbohrung 71 zur Tankleitung entlastet wird, so wird auch der Druck auf der Steuerfläche 70 entlastet, so nimmt der Längsschieber die in Fig. 16 dargestellte Schaltstellung, nämlich die Rückhubposition ein, da der konstant auf der Rückstellfläche wirkende Druck eine Kraft erzeugt, die den Längsschieber nach links verschiebt. Die Umsteuerleitung 67 wird über die Umfangsnut 23 mit der Tankleitung 15 verbunden, wodurch der Steuerschieber ebenfalls in die Schaltstellung Rückhubposition geschaltet wird, da seine große Steuerfläche 66 über die Umsteuerleitung entlastet wird.

Der Längsschieber kann nicht dargestellte kleine Bohrungen und Nuten enthalten, so angeordnet sind, dass sie eine gedrosselte Verbindung zwischen der Steuerfläche 70 und der Umfangsnut 23 oder je nach Schaltstellung mit einer ein konstantes Druckniveau aufweisenden Bohrung 41, 36, 37 herstellen, wodurch das an der Steuerfläche herrschende Druckniveau weitgehend konstant gehalten wird, selbst wenn geringe Ölleckagen von der Steuerfläche 70 weg oder zu ihr hin auftreten, was ansonsten bei vom Schlagkolben versperrter Langhubbohrung oder Kurzhubbohrung eine langsame Druckänderung bewirken würden.

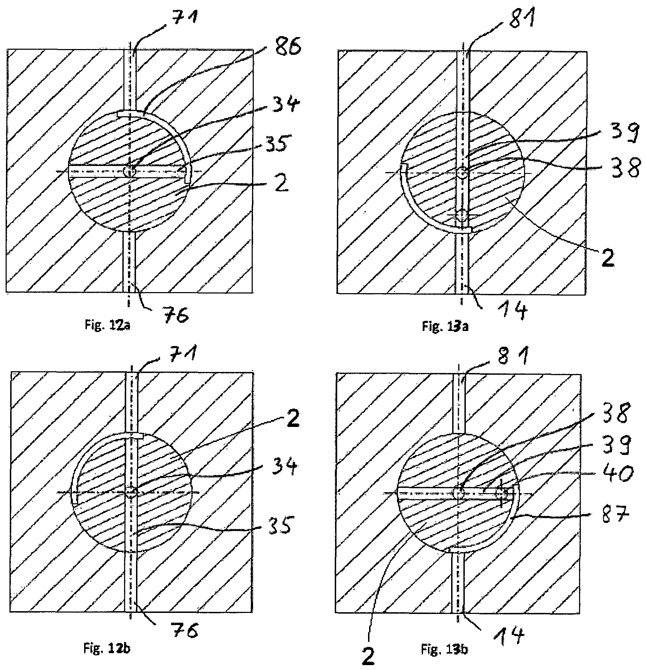

### Beschreibung der Fig. 12a, 12b, 13a und 13b:

Die Fig. 12a und 12b, bzw. 13a und 13b stellt jeweils einen Querschnitt eines Ventils in einer Ebene quer zur Ventilachse und parallel zu den Gehäusebohrungen 71 und 76, bzw. 81 und 14 dar.

Fig. 12a und 13a stellen das Drehschieberventil in der oben beschriebenen Schaltstellung, der Langhubposition dar, Skizzen 12b und 13b in der Schaltstellung Kurzhubposition.

Um in einer Schaltstellung des Drehschiebers 2 die beiden gegenüberliegenden Bohrungen im Gehäuse 71 und 76, bzw. 81 und 14 miteinander und mit der axialen Bohrung 34 bzw. 38 des Drehschiebers 2 zu verbinden, in der anderen Schaltstellung jedoch nur eine der beiden Gehäusebohrungen 71, bzw. 14 mit der axialen Bohrung 34, bzw. 38 zu verbinden und die andere Gehäusebohrung 76, bzw. 81 abzusperren, sind anstelle der radialen, den Drehschieber 2 nicht komplett durchdringenden Bohrungen 43, bzw. 44 (Fig. 10a, 10b, 11a, 11b) bogenförmige Nuten 86, bzw. 87 auf der äußeren Mantelfläche des Drehschiebers 2 angeordnet, die sich zumindest über einen Winkel erstrecken, der dem zum Umschalten des Drehschiebers erforderlichen Drehwinkel entspricht, der bei dieser Ausführung 90° beträgt.

In der Schaltstellung Langhubposition des Drehschiebers 2 (Fig. 12a) ist die Kurzhubleitung 76 von der Außenmantelfläche des Drehschiebers 2 verdeckt und abgesperrt. Gegenüberliegend verbindet die bogenförmige Nut 86 die Langhubleitung 71 mit der axialen Bohrung 34, die zu der Steuerfläche 70 des Pilotventils 68 führt. Somit werden nur Drucksignale aus der Langhubleitung 71 auf die Steuerfläche des Pilotventils geleitet, nicht jedoch aus der Kurzhubleitung 67.

Weiterhin ist in der Schaltstellung Langhubposition (Fig. 13a) die Leerschlagleitung 81 über die den Drehschieber durchdringende Bohrung 39 mit der Druckleitung 14 verbunden, in der der Betriebsdruck ansteht. Somit steht in der Leerschlagleitung während des Betriebs des Schlagwerks im Langhubmodus der Betriebsdruck an und bewirkt die Aktivierung der Funktion Leerschlagsicherung, wodurch die Ausführung weitere Arbeitszyklen des Schlagwerks unterbunden wird, wenn der Schlagkolben die theoretische Aufschlagposition in Schlaghubrichtung um eine vorbestimmte Wegstrecke überfährt. Somit ist die Leerschlagsicherung im Betriebsmodus Langhub aktiviert.

Wenn der Drehschieber 2 aus der in Fig. 12a, 13a dargestellten Schaltstellung um 90° gegen den Uhrzeigersinn gedreht wird, erreicht der Drehschieber 2 seine zweite Schaltstellung, die Kurzhubposition, die in den Skizzen 12b, 13b dargestellt ist.

Für die Schaltfunktion Hubumschaltung (Fig. 12b) verbindet die radiale Bohrung 35, welche den ganzen Drehschieber 2 durchdringt, die axiale Bohrung 34 sowohl mit der Langhubleitung 71 als auch mit der Kurzhubleitung 76. Somit werden Drucksignale aus der Kurzhubleitung und der Langhubleitung auf die Antriebsfläche des Pilotventils geleitet, was dazu führt, dass das Schlagwerk Schlaghube mit kurzem Hub ausführt.

Für die Schaltfunktion Leerschlagsicherung wird in der zweiten Schaltstellung (Fig. 13b) die Verbindung zwischen der Druckleitung 14 und der Leerschlagleitung 81 unterbrochen, da die Außenmantelfläche des Drehschiebers 2 die Leerschlagleitung 81 verdeckt und absperrt. Die bogenförmige Nut 87 verbindet über die Querbohrung 39 des Drehschiebers 2 die axialen Bohrungen 38 und 40 mit der Druckleitung 14, sodass auch in der Schaltstellung Kurzhub, bzw. Leerschlagsicherung der Betriebsdruck an der Rückstellfläche 69 des Pilotventils und an dem Druckeingang 41 des Pilotventils 68 ansteht. Somit ist die Leerschlagleitung 81 nicht über das Drehschieberventil an eine Druckleitung angeschlossen, die Leerschlagsicherung ist deaktiviert, wodurch das Schlagwerk auch dann Arbeitszyklen durchführt, wenn der Schlagkolben die theoretische Aufschlagposition in Schlaghubrichtung überfährt. Die Leerschlagsicherung ist dadurch im Betriebsmodus Kurzhub deaktiviert.

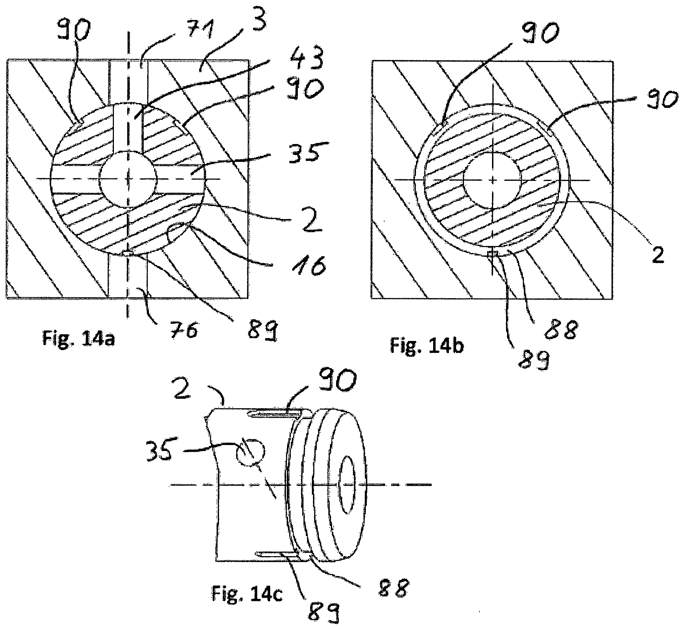

### Beschreibung der Fig. 14a, 14b, 14c und 14c:

Fig. 14a stellt einen Schnitt, senkrecht zur Drehschieberachse und parallel zu den Achsen der Kurzhubbohrung 76 und Langhubbohrung 71 dar.

Fig. 14b stellt einen Schnitt dar, der parallel zum Schnitt aus Fig.14a ausgeführt ist, der jedoch versetzt zu den Bohrungen 76 und 71 angeordnet ist und durch die Umfangsnut 88 verläuft.

Der Drehschieber 2 weist an seiner Mantelfläche zwei Kraftausgleichsflächen in Form von zwei Kraftausgleichsnuten 90 auf, die mit einer umlaufenden Nut 88 in Verbindung stehen und über eine Verbindungsnut 89 mit der Kurzhubbohrung 76 in dem Gehäuse 3 hydraulisch verbunden sind, wenn die Kurzhubbohrung 76 in der Schaltstellung Langhubposition durch den Drehschieber 2 verdeckt und abgesperrt ist (Fig. 14a). Dadurch steht in der dargestellten Schaltstellung in den Kraftausgleichsnuten der gleiche Druck an, wie in der Bohrung 76. Die Summe der Grundflächen der Kraftausgleichsnuten ist gleich groß oder größer als die Querschnittsfläche der verdeckten Bohrung 76, sodass sich die Kraftkomponenten die parallel zu der Achse der Bohrung 76 wirken, gegenseitig aufheben. Steht in der Bohrung 76 ein hoher Druck und in der ihr gegenüberliegenden Bohrung 71 jedoch ein niedriger Druck an, so würde ohne Kraftausgleichsflächen eine radiale, auslenkende Kraft auf den Drehschieber 2 wirken, die sich aus der Querschnittsfläche der abgesperrten Bohrung und der Druckdifferenz zwischen den beiden Bohrungen 71 und 76 ergibt. Die auslenkende Kraft führt zu einseitiger Anlage des Drehschiebers 2 in der Gehäusebohrung 16, was zu erhöhter Reibung und Verschleiß der Komponenten führt. Bei Verwendung von Kraftausgleichsflächen erzeugen die axialen Kraftausgleichsnuten 90 radial auf den Drehschieber 2 wirkende Kräfte, deren Summe eine Kraft erzeugt, die der auslenkenden Kraft der Bohrung 76 entgegengerichtet ist und deren Betrag ungefähr dem Betrag der auslenkenden Kraft entspricht.

Anstelle der Kraftausgleichsnuten kann bspw. auch eine ringförmige Nut auf der Mantelfläche, konzentrisch um die Austrittsöffnung der Bohrung 43 angeordnet werden, die über entsprechende Bohrungen oder Nuten hydraulisch mit der abgesperrten Bohrung 76 verbunden ist. Die Ausführung von Kraftausgleichsflächen ist nicht auf die Kurzhubbohrung 76 beschränkt, sondern kann bei allen Bohrungen oder Nuten angewendet werden, bei denen eine radiale Kraft auf einen Drehschieber 2 wirkt und zu dessen radialer Auslenkung führt.

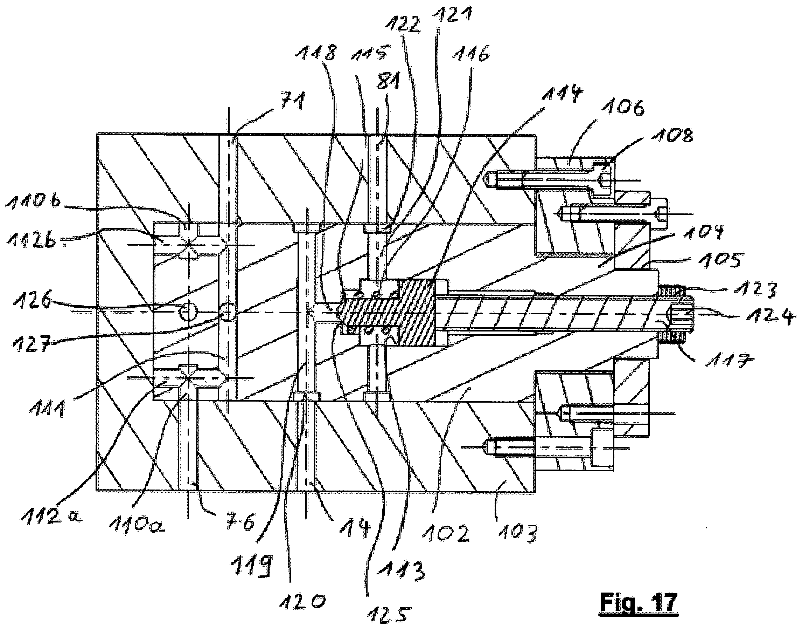

### Beschreibung der Fig. 17:

In Fig. 17 ist eine Kombination zweier Ventile dargestellt, welche auch in dem Schaltplan der Fig. 7 dargestellten ist.

In einem Gehäuse 103, welches als Ausschnitt dargestellt ist und Teil des Zylinderdeckels, des Zylinders, eines an dem Zylinderdeckel oder Zylinder angebauten Steuerblocks oder sonstiger Teile des Schlagwerkgehäuses sein kann, ist in einer Aufnahmebohrung ein Drehschieber 102 eingebaut. Der Drehschieber 102 wird in dem Gehäuse über einen Deckel 106, der die Bohrung nach außen abschließt, gegen Verschiebung in axialer Richtung gesichert. Der Deckel wird über Schauben 108, die in Gewindebohrungen des Gehäuses 103 eingreifen, befestigt. Der Drehschieber 102 besitzt auf der zum offenen Ende der Aufnahmebohrung zeigenden Seite einen Zapfen 104, an dessen Ende symmetrisch zur Ventilachse vier Schlüsselflächen 105 angeordnet sind und einen Vierkant bilden. An die Schlüsselflächen kann bspw. ein nicht dargestelltes Werkzeug angesetzt werden, um den Drehschieber 102 in eine andere Position zu drehen. Die Schlüsselflächen 105 werden auch dazu genutzt, den Drehschieber 102 nach dem Erreichen einer seiner Schaltstellungen gegen Verdrehung zu sichern, indem eine Arretierungsplatte 107, welches mittig eine Ausnehmung aufweist, die eine dem mit Schlüsselflächen 105 versehenen Zapfen 104 ähnliche Innenkontur aufweist, sodass die Platte mit der Ausnehmung über den Zapfen 104 mit den Schlüsselflächen 105 geschoben werden kann und die Innenflächen der Ausnehmung die Schlüsselflächen 105 mit geringen Abstand umschließt. Würde sich der Drehschieber 102 geringfügig drehen, so würden die Schlüsselflächen 105 des Zapfens 104 mit den Kanten an die Innenflächen der Ausnehmung stoßen. Dieser Formschluss verhindert eine weitere Drehung des Zapfens 104 und somit des Drehschiebers 102. Die Arretierungsplatte weist weiterhin zwei Bohrungen auf, durch die Schrauben 108 gesteckt werden können um die Platte verdrehsicher an dem Deckel zu befestigen, wobei die Schrauben mit ihren Außengewindeflächen in Innengewindeflächen von Bohrungen des Deckels eingreifen. Die Arretierungsplatte kann bei entfernten Schrauben auch als Werkzeug benutzt werden, um den Drehschieber 1020 zu drehen, indem eine Drehbewegung der Platte, über die Schlüsselflächen auf den Zapfen 104 und somit auf den Drehschieber 102 übertragen wird. Der Deckel kann 4 jeweils 90° auf einem Teilkreisdurchmesser versetzte Gewindebohrungen aufweisen, wodurch das Blech nach dem Schalten, d.h. Verdrehen des Drehschiebers 102 um 90° und somit Umschaltung in die andere Schaltstellung, am Deckel befestigt werden kann, ohne es von dem Zapfen 104 abzuziehen. Der Drehschieber 102 und der Deckel können mit nicht dargestellten Dichtungsnuten und Dichtungen ausgestattet sein, um Leckagen entlang der Außenmantelfläche des Drehschiebers 102 zu vermeiden.

Der Drehschieber 102 weist die Schaltfunktion eines manuell betätigten Hubumschaltventils auf. Je nach Schaltstellung des Drehschiebers 102 wird eine Verbindung zwischen der in dem Gehäuse 103 angeordneten Kurzhubbohrung 76 und der Langhubbohrung 71 hergestellt oder gesperrt. Die Langhub- und Kurzhubbohrung sind parallel zueinander, aber in Drehschieberlängsachsenrichtung versetzt zueinander angeordnet. In der dargestellten Schaltstellung, der Kurzhubposition, ist die Kurzhubbohrung 76 über eine den Drehschieber 102 nicht komplett durchdringende Querbohrung 110a, eine axiale Bohrung 112a und eine parallel zur Querbohrung 110a angeordnete weitere Querbohrung 111, welche den Drehschieber 102 komplett durchdringt und konzentrisch zur Langhubleitung 71 positioniert ist, mit der Langhubbohrung verbunden. Somit werden Drucksignale aus der Kurzhubleitung, die während der Rückhubbewegung des Schlagkolbens nach einem im Vergleich zum Langhub kürzeren Schlagkolbenweg erzeugt werden und Drucksignale aus der Langhubleitung auf die Steuerfläche des Pilotventils geleitet, was dazu führt, dass das Schlagwerk Schlaghübe mit kurzem Hub (Kurzhub) ausführt.

Da die Bohrung 111 den Drehschieber 102 komplett durchdringt, sind die auf den Drehschieber 102 aufgrund der Druckbeaufschlagung der Bohrung 111 radial wirkenden Kräfte ausgeglichen. Dadurch, dass der Bohrung 110a gegenüberliegend eine zweite, mit ihr hydraulisch verbundene Bohrung 110b, angeordnet ist, sind die auf den Drehschieber 102 aufgrund der Druckbeaufschlagung der Bohrungen 110a und 110b radial wirkenden Kräfte ebenfalls ausgeglichen.

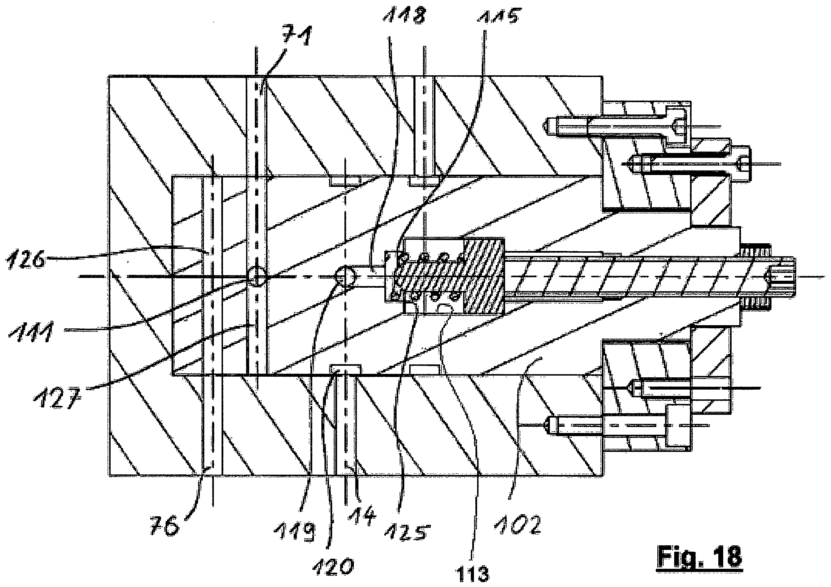

### Beschreibung der Fig. 18:

Wird der Drehschieber 102 um 90° in seine zweite Schaltstellung, die Langhubposition gedreht, so werden die Druckausgleichsbohrung 126 des Drehschiebers 102 mit der Kurzhubbohrung 76 und die Druckausgleichsbohrung 127 des Drehschiebers 102 mit der Langhubbohrung 71 in Überdeckung gebracht, sodass in der Druckausgleichsbohrung 126 der Druck aus der Kurzhubbohrung ansteht und in der Druckausgleichsbohrung 127 der Druck aus der Langhubbohrung. Da die Druckausgleichsbohrungen 126, 127 den Drehschieber 102 komplett durchdringen, gleichen sich die radialen auf den Drehschieber 102 wirkenden Kräfte aus, die durch die in der Kurzhub-, bzw. Langhubleitung wirkenden Drücke entstehen. Da die radialen Druckausgleichsbohrungen 126, 127 nicht über eine axiale Bohrung verbunden sind, ist die Verbindung zwischen der Langhubbohrung und der Kurzhubbohrung unterbrochen. Somit werden nur Drucksignale der aus der Langhubleitung 71 auf die Steuerfläche des Steuerschiebers oder des Pilotventils geleitet, nicht jedoch aus der Kurzhubleitung 76. Das Schlagwerk führt nur Schläge mit normalem Hub (Langhub) aus.

### Beschreibung der Fig. 17:

Für die Schaltfunktion Leerschlagsicherung ist in einer mit Absätzen versehenen Aufnahmebohrung 113 des Drehschiebers 102, ein Längsschieber 114 angeordnet, der einen Abdichtkegel 115 aufweist und über eine Feder 116 gegen einen axial verschiebbaren Gewindebolzen 117 gedrückt wird. Die Aufnahmebohrung ist an dem zum Abdichtkegel zugewandten Ende über eine Axialbohrung 118, die über eine Querbohrung 119 und eine Umlaufende Drucknut 120 auf der Mantelfläche des Drehschiebers 102 ständig mit der Druckleitung 14 verbunden. Das in die Aufnahmebohrung mündende Ende der Axialbohrung 118 stellt den Ventilsitz 125 für den Abdichtkegel 115 des Längsschiebers 114 dar. Der Längsschieber und der Ventilsitz stellen ein Sitzventil dar. Die Aufnahmebohrung ist über radiale Bohrungen 121 und eine umlaufende Nut 122 auf der Mantelfläche des Drehschiebers 102 ständig mit der Leerschlagleitung 81 verbunden. Der Gewindebolzen ist über sei Außengewinde in einer entsprechenden Innengewindebohrung des Drehschiebers 102 geführt. Über eine mit Innengewinde versehene Sechskantmutter 123, die auf das nach außen zeigende Ende des Gewindebolzens geschraubt wird, kann der Gewindebolzen gegen unbeabsichtigtes Verdrehen gesichert werden. Dazu wird über ein Werkzeug der Gewindebolzen am Drehen gehindert und über die Mutter gekontert, d.h. so gedreht, dass sie außen am Deckel zur Anlage kommt. Der Gewindebolzen wird dadurch verspannt und kraftschlüssige gegen Verdrehen gesichert. Zum Drehen oder Festhalten des Gewindebolzens, kann ein Werkzeug in die Innensechskantvertiefung 124 des Gewindebolzens gesteckt werden.

In der dargestellten Schaltstellung, der Normalbetriebsstellung, des Längsschiebers 114, ist der Gewindebolzen so weit in den Drehschieber 102 eingeschraubt, dass er den Längsschieber 114 gegen die Kraft der Feder, mit dem Abdichtkegel 115 gegen den Ventilsitz 125 drückt und die Verbindung zwischen der mit dem Betriebsdruck beaufschlagten Axialbohrung 118 und der mit der Leerschlagleitung verbundenen Radialbohrungen 121 unterbricht. Somit ist die Leerschlagleitung 81 nicht über das Längsschieberventil an eine Druckleitung angeschlossen, die Leerschlagsicherung ist deaktiviert, wodurch das Schlagwerk auch dann Arbeitszyklen durchführt, wenn der Schlagkolben die theoretische Aufschlagposition in Schlaghubrichtung überfährt.

### Beschreibung der Fig. 18:

Um die Leerschlagsicherung zu aktivieren, wird nach dem Lösen der als Kontermutter wirkenden Sechskantmutter 123, der Gewindebolzen soweit gedreht, dass er sich aufgrund des Gewindes um wenige Millimeter aus dem Drehschieber 102 heraus axial verschiebt. Aufgrund der Kraft der Feder 116 wird der Längsschieber 114 gegen den Gewindebolzen gedrückt und folgt dessen Bewegung, wodurch der Dichtkegel 115 von dem Ventilsitz 125 abhebt und eine Verbindung zwischen der axialen Druckbohrung 118 und der Aufnahmebohrung 113 freigibt. Wie in Fig. 17 dargestellt, ist die Aufnahmebohrung 113 über die radialen Bohrungen 121 und die Umfangsnut 122 mit der Leerschlagleitung verbunden. Der in der Druckbohrung 14 anstehende Betriebsdruck wird über die Umfangsnut 120, die radialen Bohrungen 119, die axiale Druckbohrung 118, die Aufnahmebohrung 113, die radialen Bohrungen 121 und die umlaufende Nut 122 in die Leerschlagleitung 81 geleitet. Somit steht in der Leerschlagleitung 81 während des Betriebs des Schlagwerks der Betriebsdruck an und bewirkt die Aktivierung der Funktion Leerschlagsicherung. Durch den in der Leerschlagleitung anstehenden Betriebsdruck wird die Ausführung weitere Arbeitszyklen des Schlagwerks unterbunden, wenn der Schlagkolben die theoretische Aufschlagposition in Schlaghubrichtung um eine vorbestimmte Wegstrecke überfährt und die Umfangsnut des Schlagkolbens die Leerschlagbohrung mit der Langhubbohrung verbindet. Die Schaltfunktion Leerschlagsicherung kann unabhängig von der Schaltfunktion Hubumschaltung geschaltet werden.

Der Gewindebolzen kann so ausgeführt werden, dass ein vollständiges Herausdrehen des Gewindebolzens aus dem Aufnahmegewinde des Drehschiebers 102 verhindert wird. Bspw. kann der Bolzen einen nicht dargestellten Absatz aufweisen, sodass das zum Längsschieber 114 zeigende Ende des Bolzens einen größeren Durchmesser aufweist, als die Innengewindebohrung. Hat der Gewindebolzen beim Herausdrehen eine vorbestimmte Wegstrecke in axialer Richtung überschritten, so stößt der Absatz des Gewindebolzens gegen den Absatz der Innengewindebohrung, was eine weitere Drehung des Gewindebolzens verhindert. Anstelle eines Absatzes kann der Bolzen auch einen konstanten Außendurchmesser aufweisen und eine umlaufenden Nut, in die ein Sicherungsring mit rundem Querschnitt eingelegt wird, der über den Außendurchmesser des Bolzens herausragt und somit einen Anschlag darstellt.

Anstelle eines axiale verschiebbaren Längsschieberventils 114, kann auch ein zweiter Drehschieber in dem Drehschieber 102 integriert werden, der ähnlich den Drehschiebern 2, 102 ausgeführt werden kann, wobei der Drehschieber 2, 102 das Gehäuse für den zweiten Drehschieber bildet. Eine solche Ausführung ist hier nicht dargestellt.

Die Drehschieber 2, 102 können auch in Ventilbuchsen geführt sein, die wiederum in das Gehäuse eingesetzt werden. Dadurch kann die Führungsfläche der Aufnahmebohrung aus einem anderen Material bestehen und andere Materialkennwerte aufweisen, als das Material des Gehäuses, in welches die Buchse eingesetzt wird. Ebenso kann in den Drehschieber eine Ventilbuchse eingesetzt sein, in welcher das Ventilelement des Nebenventils geführt ist.
Die Betätigung der Ventile kann manuell erfolgen, indem der Bediener das Ventil per Hand, gegebenenfalls mit Hilfe eines Werkzeugs umschaltet oder fluidisch, beispielsweise durch Druckbeaufschlagung eines Schaltfläche mit Drucköl, über einen elektrisch oder hydraulisch betätigten Motor oder einen elektrischen Schaltmagneten.

## Patentansprüche

1. Hydraulisch betriebenes Schlagwerk mit einem Schlagkolben (50), einem Steuerschieber (61) und einem Ventil zur Steuerung des hydraulisch betrieben Schlagwerks mit einem Hauptventil, das als Drehschieberventil mit einem Drehschieber (2, 102) ausgebildet ist, wobei das Hauptventil zwei Schaltfunktionen besitzt, wonach der Hub des Schlagkolbens über eine erste Schaltfunktion des Hauptventils veränderbar ist, und über eine zweite Schaltfunktion bestimmbar ist, ob das Schlagwerk nach dem Auftreten mindestens eines Leerschlags weitere Schläge durchführt,
**dadurch gekennzeichnet, dass**
der Drehschieber (2, 102) als Aufnahmegehäuse ausgestaltet ist, das ein als Nebenventil ausgebildetes Ventilelement aufnimmt, wobei das Ventilelement ein Pilotventil ist, das zur Steuerung des Steuerschiebers (61) über eine Umsteuerleitung (67) mit der Steuerfläche (66) des Steuerschiebers verbunden ist.

2. Schlagwerk nach Anspruch 1, **dadurch gekennzeichnet, dass** das Nebenventil als Drehschieber-, Längsschieber- (68) oder Sitzventil (114) ausgeführt ist.

3. Schlagwerk nach einem der Ansprüche 1 bis 2, **dadurch gekennzeichnet, dass** das Hauptventil manuell und das Nebenventil manuell oder hydraulisch betätigbar ist.

4. Schlagwerk nach Anspruch 1, **dadurch gekennzeichnet, dass** je eine Schaltstellung einer ersten Schaltfunktion mit je einer Schaltstellung einer zweiten Schaltfunktion gekoppelt ist.

5. Schlagwerk nach Anspruch 4, **dadurch gekennzeichnet, dass** die Schaltstellungen der Schaltfunktionen so gekoppelt sind, dass wenn das Schlagwerk aufgrund der ersten Schaltstellung der ersten Schaltfunktion Schlaghübe mit langem Hub ausführt, das Schlagwerk aufgrund der ersten Schaltstellung der zweiten Schaltfunktion nach dem Auftreten eines Leerschlags gestoppt wird und dass wenn das Schlagwerk aufgrund der zweiten Schaltstellung der ersten Schaltfunktion Schlaghübe mit kurzem Hub ausführt, das Schlagwerk aufgrund der zweiten Schaltstellung der zweiten Schaltfunktion nach dem Auftreten von Leerschlägen nicht gestoppt wird und wiederholt Leerschläge ausführt.

6. Schlagwerk nach einem der Ansprüche 4 oder 5, **dadurch gekennzeichnet, dass** die Schaltstellungen der Schaltfunktionen so gekoppelt sind, dass in den jeweils ersten Schaltstellungen eine Leerschlagleitung mit einer den Betriebsdruck führenden Druckleitung verbunden ist und die Kurzhubleitung von der Langhubleitung getrennt ist und in den jeweils zweiten Schaltstellungen die Leerschlagleitung von einer den Betriebsdruck führenden Druckleitung getrennt ist und die Kurzhubleitung mit einer Langhubleitung verbunden ist.

7. Schlagwerk nach einem der Ansprüche 1 bis 6, **dadurch gekennzeichnet, dass** das Hauptventil ein 4/2-Wege-Drehschieberventil und das Nebenventil ein 3/2-Wege-Längsschieberventil ist.

8. Schlagwerk nach einem der Ansprüche 1 bis 4, **dadurch gekennzeichnet, dass** das Hauptventil ein 4/3-Wege-Drehschieberventil und das Nebenventil ein 3/2-Wege-Längsschieberventil ist.

9. Schlagwerk nach einem der Ansprüche 1 bis 5, **dadurch gekennzeichnet, dass** das Hauptventil ein 3/2-Wege-Drehschieberventil und das Nebenventil ein 3/2-Wege-Längsschieberventil ist.

## Claims

1. A hydraulically operated impact mechanism with an impact piston (50), a control slide (61) and a valve for controlling the hydraulically operated impact mechanism having a main valve that is realized as a rotary slide valve with a rotary slide (2, 102), whereby the main valve has two switching functions, whereupon the stroke of the impact piston is modifiable by a first switching function of the main valve, and it is determinable by a second switching function whether the impact mechanism carries out further impact strokes after the occurrence of at least one no-load stroke,
**characterized in that**
the rotary slide (2, 102) is developed as a receiving housing that receives a valve element that is realized as a secondary valve, whereby the valve element is a pilot valve that is connected with the control face (66) of the control slide by a reversing line (67) for controlling the control slide (61).

2. Impact mechanism according claim 1, **characterized in that** the secondary valve is realized as a rotary slide valve, a longitudinal slide valve (68) or a seat valve (114).

3. Impact mechanism according claims 1 to 2, **characterized in that** the main valve is actuatable manually and the secondary valve is actuatable manually or hydraulically.

4. Impact mechanism according claim 1, **characterized in that** one switching position of a first switching function is coupled with one switching position of a second switching function.

5. Impact mechanism according claim 4, **characterized in that** the switching positions of the switching functions are coupled such that when the impact mechanism carries out impact strokes with a long stroke as a result of the first switching position of the first switching function, the impact mechanism is stopped once a no-load stroke occurs as a result of the first switching position of the second switching function and **in that** when the impact mechanism carries out impact strokes with a short stroke as a result of the second switching position of the first switching function, the impact mechanism is not stopped once a no-load stroke occurs as a result of the second switching position of the second switching function and carries out no-load strokes repeatedly.

6. Impact mechanism according 4 or 5, **characterized in that** the switching positions of the switching functions are coupled such that in the respective first switching positions a no-load stroke line is connected to a pressure line that provides the operating pressure and the short stroke line is separated from the long stroke line and in the respective second switching positions the no-load stroke line is separated from a pressure line that provides the operating pressure and the short stroke line is connected to a long stroke line.

7. Impact mechanism according 1 to 6, **characterized in that** the main valve is a 4/2-way rotary slide valve and the secondary valve is a 3/2-way longitudinal slide valve.

8. Impact mechanism according 1 to 4, **characterized in that** the main valve is a 4/3-way rotary slide valve and the secondary valve is a 3/2-way longitudinal slide valve.

9. Impact mechanism according 1 to 5, **characterized in that** the main valve is a 3/2-way rotary slide valve and the secondary valve is a 3/2-way longitudinal slide valve.

## Revendications

1. Mécanisme à percussion à actionnement hydraulique, comprenant un piston percutant (50), un tiroir de commande (61) et une vanne de commande dudit mécanisme à percussion à actionnement hydraulique ayant une vanne principale qui est réalisée en tant que vanne à tiroir rotatif comprenant un tiroir rotatif (2, 102), dans lequel ladite vanne principale présente deux fonctions de commutation, selon lesquelles la course du piston percutant peut être modifiée par une première fonction de commutation de la vanne principale, et on peut déterminer par une deuxième fonction de commutation si le mécanisme à percussion effectue d'autres frappes après l'apparition d'au moins une frappe à vide,
**caractérisé par le fait que** ledit tiroir rotatif (2, 102) est conçu en tant que boîtier de logement qui reçoit un élément de vanne réalisé en tant vanne secondaire, dans lequel ledit élément de vanne est une vanne pilote qui, pour commander le tiroir de commande (61), est reliée via une conduite d'inversion (67), à la surface de commande (66) du tiroir de commande.

2. Mécanisme à percussion selon la revendication 1, **caractérisé par le fait que** ladite vanne secondaire est conçue en tant que vanne à tiroir rotatif, à tiroir longitudinal (68) ou comme distributeur à clapet (114).

3. Mécanisme à percussion selon l'une quelconque des revendications 1 à 2,
**caractérisé par le fait que** ladite vanne principale peut être actionnée à la main et ladite vanne secondaire peut être actionnée à la main ou de façon hydraulique.

4. Mécanisme à percussion selon la revendication 1, **caractérisé par le fait que** respectivement une position de commutation d'une première fonction de commutation est couplée à respectivement une position de commutation d'une deuxième fonction de commutation.

5. Mécanisme à percussion selon la revendication 4, **caractérisé par le fait que** les positions de commutation des fonctions de commutation sont couplées de telle sorte que, lorsque le mécanisme à percussion effectue des courses de frappe à longue course en raison de la première position de commutation de la première fonction de commutation, le mécanisme à percussion est arrêté en raison de la première position de commutation de la deuxième fonction de commutation après l'apparition d'une frappe à vide, et que, lorsque le mécanisme à percussion effectue des courses de frappe à courte course en raison de la deuxième position de commutation de la première fonction de commutation, le mécanisme à percussion n'est pas arrêté en raison de la deuxième position de commutation de la deuxième fonction de commutation après l'apparition de frappes à vide et continue à effectuer des frappes à vide.

6. Mécanisme à percussion selon l'une quelconque des revendications 4 ou 5,
**caractérisé par le fait que** les positions de commutation des fonctions de commutation sont couplées de telle sorte que, dans les positions de commutation respectivement les premières, une conduite de frappe à vide est reliée à une conduite à pression présentant la pression de service et la conduite de courte course est isolée de la conduite de longue course, et que, dans les positions de commutation respectivement les deuxièmes, la conduite de frappe à vide est isolée d'une conduite à pression présentant la pression de service et la conduite de courte course est reliée à une conduite de longue course.

7. Mécanisme à percussion selon l'une quelconque des revendications 1 à 6,
**caractérisé par le fait que** ladite vanne principale est une vanne à tiroir rotatif à 4/2 voies et ladite vanne secondaire est une vanne à tiroir longitudinal à 3/2 voies.

8. Mécanisme à percussion selon l'une quelconque des revendications 1 à 4,
**caractérisé par le fait que** ladite vanne principale est une vanne à tiroir rotatif à 4/3 voies et ladite vanne secondaire est une vanne à tiroir longitudinal à 3/2 voies.

9. Mécanisme à percussion selon l'une quelconque des revendications 1 à 5,
**caractérisé par le fait que** ladite vanne principale est une vanne à tiroir rotatif à 3/2 voies et ladite vanne secondaire est une vanne à tiroir longitudinal à 3/2 voies.
